# FASCICULE DE BREVET EUROPEEN

(11) **EP 0 998 499 B1**
(45) Date de publication et mention de la délivrance du brevet: **22.09.2004**
(21) Numéro de dépôt: 98940312.6
(22) Date de dépôt: 22.07.1998
(51) Int. Cl.: C08F 4/52

(54) **NOUVEAUX SYSTEMES AMORCEURS DE POLYMERISATION ET/OU DE RETICULATION COMPRENANT UN BORATE D'ONIUM ET UNE BENZOPHENONE**
NEUE INITIATORSYSTEME FÜR DIE POLYMERISATION UND/ODER DIE VERNETZUNG DIE EIN ONIUMBORAT UND EIN BENZOPHENON ENTHALTEN
NOVEL POLYMERISATION AND/OR CROSS-LINKING INITIATOR SYSTEMS COMPRISING AN ONIUM BORATE AND A BENZOPHENONE

(30) Priorité: 23.07.1997 FR 9709379; 29.01.1998 FR 9801251
(43) Date de publication de la demande: 10.05.2000
(73) Titulaire: RHODIA CHIMIE, 92408 Courbevoie Cédex (FR)
(72) Inventeur: DAVID, Marie-Anne, F-69200 Vénissieux (FR); FRANCES, Jean-Marc, F-69330 Meyzieu (FR)
(86) Numéro de dépôt international: PCT/FR1998/001620
(87) Numéro de publication internationale: WO 1999/005181

(56) Documents cités:
- EP-A- 0 562 897

## Description

Le domaine de l'invention est celui de la catalyse des réactions de polymérisation(s) et/ou de réticulation(s) par voie cationique, de monomères, oligomères et/ou polymères, comprenant des radicaux fonctionnels réactifs aptes à former des pontages intra et inter caténaires, de manière à obtenir un revêtement ou un matériau composite polymérisé et/ou réticulé ayant une certaine dureté et une certaine tenue mécanique.

Plus précisément, la présente invention a pour objet de nouveaux systèmes amorceurs de polymérisation et/ou de réticulation par voie cationique. Ces amorceurs comprennent au moins un borate d'onium et au moins une benzophénone permettant l'initiation et le déroulement de réactions de formations de polymères et/ou de résines, à partir de substrats formés de monomères, oligomères et/ou de polymères à groupements organofonctionnels réactifs.

Les réactions plus particulièrement concernées sont celles dans lesquelles des agents cationiques agissent comme promoteurs directs des liaisons inter et/ou intra caténaires.

En général, ces réactions se produisent par activation photochimique et/ou thermique et/ou par faisceau d'électrons. A titre d'exemple pratique, l'énergie lumineuse d'un rayonnement U.V. permet la formation de protagonistes actifs, par exemple par coupure de liaisons, et ainsi le déclenchement des réactions de polymérisation et/ou réticulation est effectué.

Dans la présente description, les polymères et/ou résines obtenus sont préparés à partir de monomères, oligomères et/ou polymères qui sont soit (1) de nature organique, notamment uniquement hydrocarbonée, soit (2) de nature poly-organosiloxane, et comprennent dans leur structure des groupements organo-fonctionnels, par exemple du type époxyde, oxétannes, et/ou alkényl-éther, qui réagissent par voie cationique et à l'aide des nouveaux systèmes amorceurs selon l'invention décrits ci-après. On peut également en plus utiliser (3) des monomères, oligomères et/ou polymères avec des groupements acryliques, par exemple acryliques purs ou méthacryliques, qui peuvent être ajoutés dans le milieu de polymérisation cationique.

La présente invention a donc également pour objet des compositions comprenant les matériaux de base (monomères, oligomères et/ou polymères) polymérisables et/ou réticulables par voie cationique, les systèmes amorceurs décrits ci-après, et éventuellement un ou plusieurs additifs choisis parmi ceux généralement connus dans les applications auxquelles sont destinées ces compositions.

Par exemple, ces compositions peuvent être utilisées pour la réalisation de revêtements sur des objets tels que des articles ou des supports solides, notamment support papier, film polymère de type polyester ou polyoléfine, support aluminium, et/ou support fer blanc.

Des amorceurs de polymérisation et/ou réticulation, par exemple photochimique, des monomères, oligomères et/ou polymères comprenant dans leur structure des groupements organofonctionnels réactifs sont décrits dans EP-A-0 562 897 au nom de la Demanderesse. Les sels amorceurs de ce brevet représentent un progrès technique notable par rapport aux amorceurs antérieurement connus de type sels d'onium ou de complexes organométalliques, et en particulier par rapport à ceux dont l'anion du sel amorceur est SbF₆- qui est l'un des seuls qui soient corrects sur le plan des performances catalytiques, mais qui pose de graves problèmes d'utilisation en raison de la présence de métaux lourds.

Les sels amorceurs selon EP-A-0 562 897 sont employés, par exemple, pour la réalisation de revêtements sur papier à partir de monomères époxydés polymérisés et réticulés par irradiation sous U.V.. Pour apprécier les performances d'amorceur, on évalue la réactivité du couple substrat/amorceur et la vitesse de polymérisation/réticulation, au travers de la vitesse de défilement nécessaire au durcissement de la couche enduite sur le papier ainsi qu'au travers du nombre de passages. Les résultats mesurés sont acceptables, mais il n'en demeure pas moins que, pour satisfaire aux exigences de productivité des applicateurs, les systèmes amorceurs se doivent d'être de plus en plus performants. Ils doivent donc permettre d'atteindre des réactivités et des vitesses de polymérisation/réticulation aussi élevées que possible, de manière à pouvoir augmenter les cadences d'enduction.

De ce fait, l'un des objectifs essentiels de la présente invention est de satisfaire aux exigences de productivité énoncées ci-avant.

Un autre objectif essentiel de l'invention est de fournir de nouveaux systèmes amorceurs, performants comme amorceurs vis-à-vis du plus grand nombre de monomères, oligomères et/ou polymères organofonctionnels polymérisables et/ou réticulables par voie cationique; les monomères, oligomères et/ou polymères étant notamment (1) de nature organique, de préférence uniquement hydrocarboné, ou (2) de nature polyorganosiloxane, éventuellement en mélange (3) avec d'autres monomères, oligomères et/ou polymères contenant des groupes acryliques.

Un autre objectif essentiel de l'invention est de fournir des systèmes amorceurs cationiques efficaces, en faible quantité, mais aussi faciles à manipuler et peu toxiques, et qui de ce fait, permettent d'obtenir des revêtements et/ou matériaux composites qui ne jaunissent pas au cours du temps et/ou après cuisson.

Un autre objectif de l'invention est de fournir des compositions de monomères, oligomères et/ou polymères organofonctionnels réticulables par voie cationique et, sous activation photonique et/ou thermique et/ou par faisceau d'électrons.

Un autre objectif de l'invention est de fournir des compositions de ce type utilisables aussi bien en couche mince, dont l'épaisseur se situe par exemple dans l'intervalle allant de 0,1 à 1 µm, qu'en couche plus épaisse, dont l'épaisseur se situe par exemple dans l'intervalle allant d'une valeur supérieure à un micromètre à plusieurs centimètres.

Un autre objectif de l'invention est de fournir des compositions de ce type pour la préparation de matériau composite.

Ces divers objectifs sont atteints par l'invention qui concerne tout d'abord, dans son premier objet, de nouveaux systèmes amorceurs comprenant au moins un borate d'onium judicieusement sélectionné et au moins une benzophénone judicieusement sélectionnée. Ainsi, le système amorceur de polymérisation et/ou de réticulation comprend :
(1) au moins un borate d'onium dont :
   (**i**) l'entité cationique est choisie parmi les sels d'onium de formule (**I**)

      [(R¹)ₙ- I -(R²)ₘ]⁺ (I)

      formule dans laquelle :
      - les radicaux **R**^{**1**}, identiques ou différents, représentent un radical aryle carbocyclique ou hétérocyclique en C₆-C₂₀, ledit radical hétérocyclique pouvant contenir comme hétéroéléments de l'azote et/ou du soufre,
      - les radicaux **R**^{**2**}, identiques ou différents, représentent R¹, un radical alkyle linéaire ou ramifié en C₁-C₃₀, ou un radical alkényle linéaire ou ramifié en C₃₀ au maximum ;
      - lesdits radicaux R¹ et R² étant éventuellement substitués par :
         . un groupement alkyle linéaire ou ramifié en C₁-C₂₅,
         . un groupement alcoxy OR¹³,
         . un groupement cétonique -(C=O)-R¹³,
         . un groupement ester ou carboxylique -(C=O)-O- R¹³,
         . un groupement mercapto SR¹³,
         . un groupement mercapto SOR¹³,
         . **R**^{**13**} étant un radical choisi parmi le groupe constitué d'un atome d'hydrogène, un radical alkyle linéaire ou ramifié en C₁-C₂₅, un radical aryl en C₆-C₃₀, ou un radical alkylaryl dont la partie alkyle est linéaire ou ramifiée en C₁-C₂₅ et la partie aryle est en C₆-C₃₀,
         . un groupement nitro,
         . un atome de chlore,
         . un atome de brome,
         . et/ou un groupement cyano,
      - n est un nombre entier allant de 1 à v+1, v étant la valence de l'iode,
      - m est un nombre entier allant de 0 à v, avec n + m = v+1 ;
   (II) et en ce que l'entité anionique borate a pour formule (**II**) :

      [B Xₐ R³ _{b}]⁻ (II)

      dans laquelle :
      - a et b sont des nombres entiers tels que 0 ≤ a < 4, 0 < b ≤ 4, et a + b = 4,
      - les symboles X, identiques ou différents, représentent :
         un atome d'halogène choisi parmi le chlore et/ou le fluor avec 0 ≤ a ≤ 3,
         . une fonction OH avec 0 ≤ a ≤ 2,
      - et les radicaux **R**^{**3**}, identiques ou différents, représentent :
         . un radical phényle substitué par au moins un groupement électroattracteur tel que -CF₃, -OCF₃, -NO₂, CN, -SO₂R¹⁴, - O(C=O)-R¹⁴, -O-CₙF₂ₙ₊₁, -CₙF₂ₙ₊₁, n étant un nombre entier compris entre 1 et 20 ou substitué par au moins 2 atomes d'halogène, en particulier le fluor,
         . un radical aryle contenant au moins deux noyaux aromatiques tel que biphényle, naphtyle, éventuellement substitué par au moins un atome d'halogène, notamment un atome de fluor ou un groupement électroattracteur tel que -CF₃, -OCF₃, -NO₂, -CN, -SO₂R¹⁴, - O(C=O)-R¹⁴, **R**^{**14**} étant -O-CₙF₂ₙ₊₁, -CₙF₂ₙ₊₁, n étant un nombre entier compris entre 1 et 20 ;
**(2)** et au moins une benzophénone :
   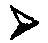 répondant à l'une des formules **(III)** à **(VI)** suivantes : 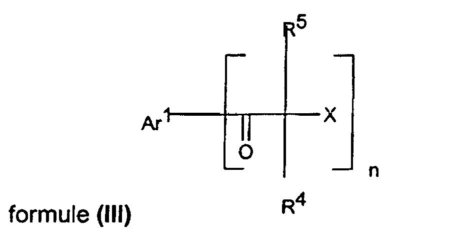 dans laquelle :
      - lorsque n = 1, **Ar**^{**1**} représente un radical aryle contenant de 6 à 18 atomes de carbone, un radical tétrahydronaphtyle, thiényle, pyridyle ou furyle ou un radical phényle porteur d'un ou plusieurs substituants choisis dans le groupe constitué de F, Cl, Br, CN, OH, les alkyles linéaires ou ramifiés en C₁-C₁₂, - CF³, -OR⁶, -OPhényle, -SR⁶, -SPhényle, -SO₂Phényle, -COOR⁶, - O-(CH₂-CH=CH₂), -O(C₂H₄-O)ₘ-H, -O(C₃H₆O)ₘ-H, m étant compris entre 1 et 100,
      - lorsque n = 2, **Ar**_{**1**} représente un radical arylène en C₆-C₁₂ ou un radical phénylène-T-phénylène, où T représente -O-, -S-, -SO₂- ou -CH₂-,
      - **X** représente un groupe -OR⁷ ou -OSiR⁸(R⁹)₂ ou forme, avec R⁴, un groupe -O-CH(R¹⁰)-,
      - **R**_{**4**} représente un radical alkyle linéaire ou ramifié en C₁-C₈ non substitué ou porteur d'un groupe -OH, -OR⁶, acyloxy en C₂-C₈, -COOR⁶, -CF³, ou -CN, un radical alcényle en C₃ ou C₄, un radical aryle en C₆ à C₁₈, un radical phénylalkyle en C₇ à C₉,
      - **R**^{**5**} a l'une des significations données pour R⁴ ou représente un radical -CH₂CH₂R¹¹, ou encore forme avec R⁴, un radical alkylène en C₂-C₈ ou un radical oxa-alkylène ou aza-alkylène en C₃-C₉,
      - **R**^{**6**} représente un radical alkyle inférieur contenant de 1 à 12 atomes de carbone,
      - **R**^{**7**} représente un atome d'hydrogène, un radical alkyle en C₁-C₁₂, un radical alkyle en C₂-C₆ porteur d'un groupe -OH, -OR⁶ ou -CN, un radical alcényle en C₃-C₆, un radical cyclohexyle ou benzyle, un radical phényle éventuellement substitué par un atome de chlore ou un radical alkyle linéaire ou ramifié en C₁-C₁₂, ou un radical tétrahydropyrannyle-2,
      - **R**^{**8**} et **R**^{**9**} sont identiques ou différents et représentent chacun un radical alkyle en C₁-C₄ ou un radical phényle,
      - **R**^{**10**} représente un atome d'hydrogène, un radical alkyle en C₁-C₈ ou un radical phényle,
      - **R**^{**11**} représente un radical -CONH₂, -CONHR⁶, -CON(R⁶)₂, -P(O)(OR⁶)₂ ou pyridyle-2 ; 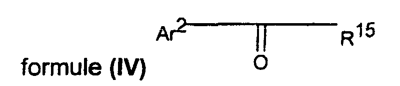 dans laquelle :
      - Ar² a la même signification que Ar¹ de la formule (III) dans le cas où n = 1,
      - **R**^{**15**} représente un radical choisi parmi le groupe constitué d'un radica **Ar**^{**2**}**,** un radical -(C=O)-**Ar**^{**2**}, un radical alkyle linéaire ou ramifié en C₁-C₁₂, un radical cycloalkyle en C₆-C₁₂, et un radical cycloalkyle formant un cycle en C₆-C₁₂ avec le carbone de la cétone ou un carbone du radical **Ar**^{**2**}, ces radicaux pouvant être substitués par un ou plusieurs substituants choisis dans le groupe constitué de -F, -Cl, -Br, -CN, -OH, - CF₃,, -OR⁶, -SR⁶, -COOR⁶, les radicaux alkyles linéaires ou ramifiés en C₁-C₁₂ porteur éventuellement d'un groupe -OH, -OR⁶ et/ou -CN, et les radicaux alcényles linéaires ou ramifiés en C₈ maximum ; 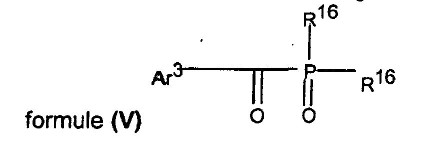 dans laquelle :
      - **Ar**^{**3**} a la même signification que Ar¹ de la formule (III) dans le cas où n=1,
      - **R**^{**16**}, identiques ou différents, représentent un radical choisi parmi le groupe constitué d'un radical Ar³, un radical -(C=O)-Ar³, un radical alkyle linéaire ou ramifié en C₁-C₁₂, un radical cycloalkyle en C₆-C₁₂, ces radicaux pouvant être substitués par un ou plusieurs substituants choisis dans le groupe constitué de -F, -Cl, -Br, -CN, -OH, -CF₃, -OR⁶, -SR⁶,
      - COOR⁶, les radicaux alkyles linéaires ou ramifiés en C₁-C₁₂ porteurs éventuellement d'un groupe -OH, -OR⁶ et/ou -CN, et les radicaux alcényles linéaires ou ramifiés en C₈ maximum ; 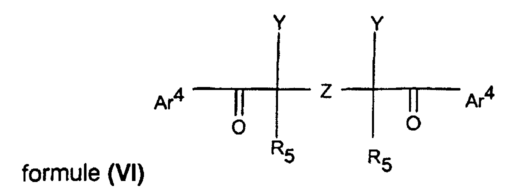 dans laquelle :
      - **R**^{**5**}, identiques ou différents, ont les mêmes significations que dans la formule (III),
      - **Y**, identiques ou différents, représentent X et/ou R⁴,
      - **Z** représente :
         une liaison directe,
         . un radical divalent alkylène en C₁-C₆, ou un radical phénylène, diphénylène ou phénylène-T-phénylène, ou encore forme, avec les deux substituants R⁵ et les deux atomes de carbone porteurs de ces substituants, un noyau de cyclopentane ou de cyclohexane,
         . un groupe divalent -O-R¹²-O-, -O-SiR⁸R⁹-O-SiR⁸R⁹-O-, ou -O-SiR⁸R⁹-O-,
      - **R**^{**12**} représente un radical alkylène en C₂-C₈, alcénylène en C₄-C₆ ou xylylène.
      - et **Ar**^{**4**} a la même signification que Ar¹ de la formule (II) dans le cas où n=1 ;
   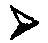 ou correspondant au dibenzoylperoxyde.

Avantageusement, l'entité anionique du sel d'onium est choisie parmi les espèces suivantes, seul ou en mélange, de formule : [B (C₆F₅)₄]⁻, [B (C₆H₃(CF₃)₂)₄]⁻, [B (C₆H₄OCF₃)₄]⁻, [B (C₆H₄CF₃)₄]⁻, [(C₆F₅)₂ B F₂]⁻, , [C₆F₅ B F₃]⁻, [B (C₆H₃F₂)₄]⁻.

Plus particulièrement, l'entité anionique du sel d'onium est choisie parmi les espèces suivantes, seul ou en mélange, de formules : [B(C₆F₅)₄]⁻, [B (C₆H₃(CF₃)₂)₄]⁻[B (C₆H₄OCF₃)₄]⁻.

Pour l'entité cationique du borate d'onium, celle-ci sera avantageusement choisie parmi le groupe constitué de :

[(C₆H₅)₂ I]⁺, [C₈H₁₇ - O - C₆H₅ - I -C₆H₅]⁺,

[C₁₂H₂₅ - C₆H₅ - I - C₆H₅]⁺, [(C₈H₁₇ O - C₆H₅)₂ I]^{+,}

[(C₈H₁₇) - O - C₆H₅ - I - C₆H₅)]^{+,} [(C₁₂H₂₅ - C₆H₅)₂ I]⁺,

[(CH(CH₃)₂-C₆H₅-)- l -C₆H₅- CH₃]⁺, [C₆H₄-O-C₆H₄- l -C₆H₄]^{+,}

[C₆H₄-(C=O)-C₆H₄- I - C₆H₄]^{+,} [C₆H₄-O-C₆H₄- l -C₆H₄-O-C₆H₄]⁺

[C₆H₄-(C=O)-C₆H₄ -I-C₆H₄-(C=O)-C₆H₄]^{+,}

et leur mélange.

Les borates d'onium faisant l'objet de la présente invention peuvent être préparés par réaction d'échange entre un sel de l'entité cationique (halogénure tel que par exemple chlorure, iodure) avec un sel de métal alcalin de l'entité anionique (sodium, lithium, potassium).

Les conditions opératoires (quantités respectives de réactifs, choix des solvants, durée, température, agitation) sont à la portée de l'homme de l'art; celles-ci doivent permettre de récupérer le borate d'onium recherché sous forme solide par filtration du précipité formé ou sous forme huileuse par extraction à l'aide d'un solvant approprié.

Les modes opératoires de synthèse des halogénures des entités cationiques de formule (I) sont connus en soi. A ce sujet, on se reportera notamment au brevet EP-B-0 562 897 au nom de la Demanderesse.

Les modes opératoires de synthèse des sels de métal alcalin de l'entité anionique (II) sont également connu en soi ; notamment par exemple, dans le brevet EP-B-0 562 897 au nom de la Demanderesse.

Dans le cadre de l'invention, de nombreux types de benzophénones peuvent être utilisés en combinaison avec le borate d'onium. A ce sujet, le type de benzophénone, employé et préféré sera fonction de l'utilisation envisagée, c'est-à-dire que, par exemple, dans le cas d'activation sous U.V., son ou ses maximum d'absorption de lumière U.V. sont adaptés avec le type d'application envisagé.

Par exemple, dans le cas où la composition à réticuler et/ou polymériser contient des pigments blancs absorbants dans le domaine des U.V., on sélectionnera une benzophénone ayant un maximum d'absorption de la lumière dans le domaine du visible.

Dans le cas d'une utilisation pour la fabrication de vernis silicone et/ou organique transparent sous activation U.V., on choisira une benzophénone dont le maximum d'absorption est superposable avec les raies d'émission de la lampe U.V..

A titre d'exemples de benzophénones, on citera notamment les produits suivants, seuls ou en mélange :
9-xanthénone ; 1-4 dihydroxyanthraquinone ; anthraquinone ;
2-méthylanthraquinone ; 2,2'-bi (3-hydroxy-1,4-naphtoquinone) ;
2-6 dihydroxyanthraquinone ; 1-hydroxycyclohexylphénylcétone ;
1,5 dihydroxyanthraquinone ; 1,3-diphényl-1,3-propanedione ;
5,7-dihydroxyflavone ; dibenzoylperoxyde ; acide 2-benzoylbenzoique ;
2-hydroxy-2méthylpropiophénone ; 2-phénylacétophénone ;
2,4,6-triméthylbenzoyldiphénylphosphine oxyde ; anthrone ;
bi(2,6 diméthylbenzoyl)-2,4,4-triméthylpentylphosphine oxyde ;
poly [.1,4-benzènedicarbonyl- alt-bis (4-phénoxyphényl)méthanone]; 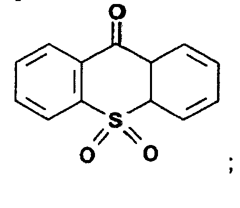 et

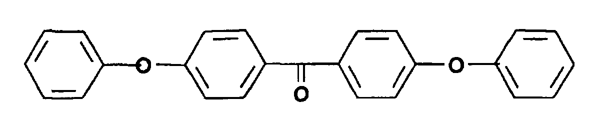

De préférence, le ou les benzophénones sont choisis parmi le groupe constitué de :
4,4'diméthoxybenzoïne ; phénanthrènequinone ;
2-éthylanthraquinone ; 2-méthylanthraquinone ;
1,8-dihydroxyanthraquinone ;
2,2-diméthoxy-2-phénylacétophénone ; benzoïne ;
2-hydroxy-2méthylpropiophénone ; benzaldéhyde ;
4-(2-hydroxyéthoxy)phényl-(2-hydroxy-2-méthylpropyl) cétone : benzoylacétone; 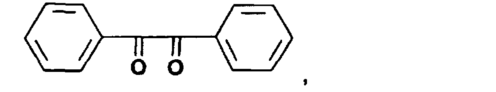 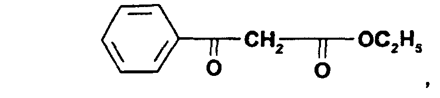 et leur mélange.

A titre d'exemples de produits commerciaux de benzophénones, on peut citer les produits commercialisés par la société CIBA-GEIGY : Irgacure 369, Irgacure 651, Irgacure 907 et Darocure 1173.

Les systèmes amorceurs selon l'invention peuvent être mis en oeuvre, tels qu'ils sont obtenus à l'issue de leur procédé de préparation, par exemple sous forme solide ou liquide ou en solution dans un solvant approprié, dans des compositions de monomères, oligomères et/ou polymères qui sont destinées à être polymérisées et/ou réticulées par voie cationique et sous activation, par exemple U.V..

Aussi selon un autre de ces aspects, la présente invention concerne, dans son second objet, des compositions comprenant au moins une matrice à base d'un monomère, d'un oligomère et/ou d'un polymère polymérisable et/ou réticulable par voie cationique, une quantité catalytiquement efficace d'au moins un système amorceur du type de ceux conformes à l'invention et décrits ci-avant, éventuellement un accélérateur de polymérisation et/ou réticulation, et éventuellement encore un ou plusieurs additifs choisis parmi ceux généralement connus dans les applications auxquelles sont destinées ces compositions.

Par quantité catalytique efficace d'amorceur, on entend selon l'invention la quantité suffisante pour amorcer la polymérisation et/ou la réticulation. Cette quantité est généralement comprise entre 0,01 et 20 parties en poids, le plus souvent entre 0,05 et 8 parties en poids pour polymériser et/ou réticuler 100 parties en poids de la matrice. Au sein du système amorceur selon l'invention, le rapport en poids borate d'onium/benzophénone est de préférence compris entre 0,1 et 10.

Selon une première disposition intéressante de l'invention prise dans son second objet, la composition polymérisable et/ou réticulable est à base de monomère(s) et/ou oligomère(s) et/ou polymère(s), de nature organique, appartenant à au moins l'une des espèces organiques suivantes :
**α**_{**1.1**} époxydes cycloaliphatiques, pris à eux seuls ou en mélange entre eux :
   - les époxydes du type 3,4-époxycyclohexylméthyl-3',4'-époxycyclo-hexane carboxvlate : 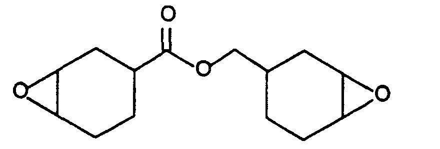
   - ou Bis(3,4-époxycyclohéxyl)adipate, étant particulièrement préférés ;
**α**_{**1.2**} époxydes non cycloaliphatiques, pris à eux seuls ou en mélange entre eux ;
   - les époxydes du type de ceux résultant de la condensation de Bisphénol A et d'épichlorhydrine et du type :
      - di et triglycidyléthers de Bisphénol A alcoxylé de 1,6 hexanediol, de glycérol, de néopentylglycol et de propane triméthylol,
      - ou diglycidyléthers de Bisphénol A,
   - les époxydes d'alpha-oléfines, époxyde NOVOLAC, huile de soja et de lin époxydée, polybutadiène époxydé, et plus généralement un polymère diénique époxydé et monohydroxylé, saturé ou insaturé, décrit dans la demande de brevet WO-A-96/11215 , obtenu par époxydation d'un polymère diénique de base de formule :

      (HO)ₓ-J-L_{z}-K-(OH)_{y} ou (HO)ₓ-J-K-L-(OH)_{y}
   dans laquelle :
   + les symboles J et K représentent des séquences ou blocs consistant dans des : homopolymères obtenus par polymérisation d'un monomère diène conjugué ayant de 4 à 24 atomes de carbone (comme par exemple : le butadiène-1,3, l'isoprène ou méthyl-2 butadiène-1,3, le phényl-2 butadiène-1,3, le pentadiéne-1,3, le diméthyl-3,4 hexadiène-1,3, le diéthyl-4,5 octadiène-1,3) ; copolymères obtenus par copolymérisaiton d'au moins deux des diènes conjugués précités entre eux ; ou des copolymères obtenus par copolymérisation d'au moins un des diènes conjugués précités avec au moins un monomère insaturé éthyléniquement choisi parmi les monomères vinyles aromatiques ayant de 8 à 20 atomes de carbone (comme par exemple : le styrène, l'ortho-, méta- ou paraméthylstyrène, le vinyle mésitylène, le vinyle naphtalène) ;
   + le symbole L représente une séquence ou un bloc polymère obtenu à partir des monomères vinyles aromatiques précités ;
   + x et y sont des nombres égaux à zéro ou 1, x étant égal à zéro quand y = 1 et x étant égal à 1 quand y = 0 ; et z est un nombre égal à zéro ou 1 ;
   ledit polymère diénique de base, d'une part avant époxydation, pouvant être partiellement saturé par hydrogénation, et d'autre part après époxydation, contenant de 0,1 à 7 milliéquivalents de fonction époxy par gramme de polymère diénique époxydé et monohydroxylé [comme exemple de polymères diéniques époxydés et monohydroxylés on citera les espèces obtenues par époxydation des polymères diéniques de base suivants : Is-Bu-OH, Is-St/Bu-OH, Is-EtBu-OH ou Is-St/EtBu-OH, où : le sybmole Is est un bloc polyisoprène, le symbole Bu est un bloc polybutadiène, le symbole EtBu est un bloc poly(éthylène-butylène) (issu de l'hydrogénation sélective d'un bloc polybutadiène), le symbole St est un bloc polystyrène (l'ensemble St/Bu représentant un bloc à base d'un copolymère statistique obtenu par copolymérisation de butadiène-1,3 et de styrène), et OH est un groupe hydroxyle (l'ensemble -EtBu-OH signifiant, par exemple, que le donneur de groupe hydroxyle est attaché au bloc polybutadiène hydrogéné)], étant particulièrement préférés ;
**α**_{**2**} alcényl-éthers, linéaires ou cycliques, pris à eux seuls ou en mélange entre eux :
   - les vinyl-éthers, en particulier l'éther de triéthylène glycol divinylique, les éthers vinyliques cycliques ou les tétramères et/ou dimères d'acroléines, et le vinyl-éther de formule suivante : 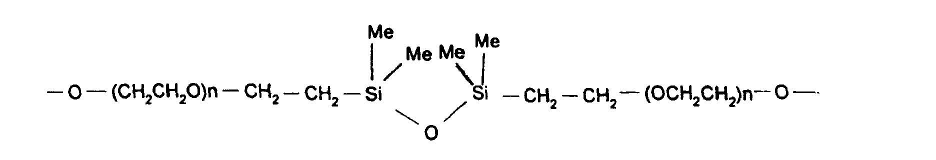
   - les propényl-éthers,
   - et les butényl-éthers étant, plus spécialement préférés,
**α**_{**3**} les polyols : pris à eux seuls ou en mélange entre eux, et de préférence le composé de formule ci dessous, I étant supérieur à 1 et inférieur à 100 : 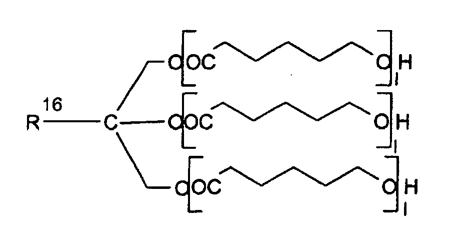
dans laquelle **R**^{**16**} est un radical alkyl linéaire ou ramifié en C₁-C₃₀.

Selon une deuxième disposition intéressante de l'invention prise dans son second objet, la composition polymérisable et/ou réticulable est à base de monomère(s) et/ou oligomère(s) et/ou polymère(s), de nature polyorganosiloxane, constitués de motifs de formule **(VII)** et terminés par des motifs de formule **(VIII)** ou cycliques constitués de motifs de formule **(VII)** représentées ci-dessous : 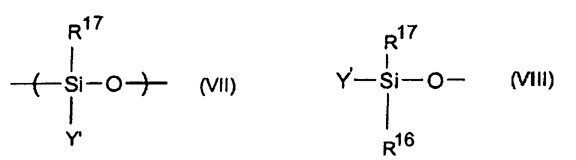 dans lesquelles :
- **R**^{**16**} est un radical alkyle linéaire ou ramifié en C₁-C₃₀ ;
- les symboles **R**^{**17**} sont semblables ou différents et représentent :
   . un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
   . un radical cycloalkyle contenant entre 5 et 8 atomes de carbone cycliques, éventuellement substitué,
   . un radical aryle contenant entre 6 et 12 atomes de carbone pouvant être substitué, de préférence phényle ou dichlorophényle,
   . une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alkoxyles contenant 1 à 3 atomes de carbone,
- les symboles **Y'** sont semblables ou différents et représentent :
   . le groupement **R**^{**17**},
   . un radical hydrogène,
   . et/ou un groupement organofonctionnel réticulable par voie cationique, de préférence un groupement époxyfonctionnel et/ou vinyloxyfonctionnel, relié au silicium du polyorganosiloxane par l'intermédiaire d'un radical divalent contenant de 2 à 20 atomes de carbone et pouvant contenir au moins un hétéroatome, de préférence de l'oxygène,
   . et l'un au moins des symboles Y' représentant un groupement organique fonctionnel réticulable par voie cationique.

Selon une variante avantageuse de l'invention, au moins un des symboles **R**^{**17**} des polyorganosiloxanes utilisés dans le cadre de l'invention en tant que monomère(s), oligomère(s) ou polymère(s) représente un radical phényle, tolyle ou dichlorophényle.

Selon une autre variante avantageuse de l'invention, les polyorganosiloxanes utilisés comportent de 1 à 10 groupements organofonctionnels par mole. Pour un groupement époxyfonctionnel cela correspond à des taux d'époxyde variant de 20 à 2000 meq. molaire/100 g de polyorganosiloxane.

Les polyorganosiloxanes linéaires peuvent être des huiles de viscosité dynamique à 25°C, de l'ordre de 10 à 10 000 mPa.s à 25°C, généralement de l'ordre de 50 à 5 000 mPa.s à 25°C et, plus préférentiellement encore, de 100 à 600 mPa.s à 25°C, ou des gommes présentant une masse moléculaire de l'ordre de 1 000 000.

Lorsqu'il s'agit de polyorganosiloxanes cycliques, ceux-ci sont constitués de motifs (VII) qui peuvent être, par exemple, du type dialkylsiloxy ou alkylarylsiloxy. Ces polyorganosiloxanes cycliques présentent une viscosité de l'ordre de 1 à 5 000 mPa.s.

Comme exemples de radicaux divalents reliant un groupement organofonctionnel du type époxy, on peut citer ceux inclus dans les formules suivantes :

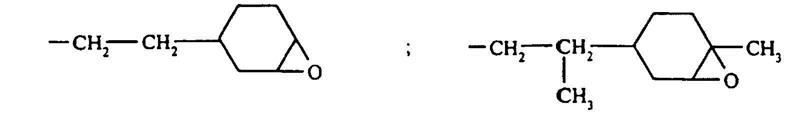

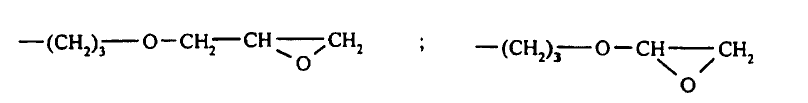

S'agissant des groupements organofonctionnels du type alkényléther, on peut mentionner ceux contenus dans les formules suivantes :

-(CH₂)₃-O-CH=CH₂ ; -(CH₂)₃-O-R¹⁸-O-CH=CH₂ ; -(CH₂)₃-O-CH=CH-R¹⁹

dans lesquelles :
- **R**^{**18**} représente :
   - un radical alkylène linéaire ou ramifié en C₁-C₁₂, éventuellement substitué,
   - ou un radical arylène en C₅-C₁₂, de préférence phénylène, éventuellement substitué, de préférence par un à trois groupements alkyles en C₁-C₆,
- **R**^{**19**} représente un radical alkyle linéaire ou ramifié en C₁-C₆.

Selon une troisième autre disposition intéressante de l'invention prise dans son second objet, la composition polymérisable et/ou réticulable est à base de monomère(s) et/ou oligomère(s) et/ou polymère(s), de nature polyorganosiloxane et de nature organique, notamment hydrocarbonée.

Selon une quatrième autre disposition intéressante de l'invention prise dans son second objet, la composition polymérisable et/ou réticulable est à base de monomère(s) et/ou oligomère(s) et/ou polymère(s), de nature polyorganosiloxane et/ou de nature organique, notamment hydrocarbonée, et comprend en outre des monomères, oligomères et/ou polymères à groupements organofonctionnels d'espèce acrylate; et notamment acrylates époxydés, acrylo-glycéro-polyester, acrylates multifonctionnels, acrylo-uréthanes, acrylo-polyéthers, acrylo-polyesters, polyesters insaturés, acrylo-acryliques.

Ces espèces acryliques, éventuellement en mélange, utilisables avec des monomère(s) et/ou oligomère(s) et/ou polymère(s) de nature polyorganosiloxane et/ou de nature organique, sont choisies de préférence parmi les espèces suivantes : triacrylate de triméthylolpropane, diacrylate de tripropylèneglycol, glycidylpropyl triacrylate, pentaérythritol triacrylate, triméthylolpropane éthoxylatetriacrylate, Bisphénol-A éthoxylate diacrylate, tripropylèneglycol diacrylate, triéthylèneglycol diacrylate, tetraéthylèneglycoldiacrylate, polyethers acrylates, polyesters acrylates (par exemple le produit Ebecryl 810 de la société UCB-Radcure), et époxy acrylates (par exemple le produit Ebecryl 600 de la société UCB-Radcure).

Il est rappelé que, dans le présent mémoire, l'expression "acrylique" englobe des composés comprenant la fonction de type CH₂=CH-COO- ou de type CH₂=C(CH₃)-COO-.

Classiquement les compositions selon l'invention, prises dans son second objet, peuvent comprendre, en outre, un ou plusieurs additifs choisis en fonction de l'application finale visée.

Quand la composition polymérisable et/ou réticulable est à base d'au moins l'une des espèces organiques α_{1.1} à α₃, en mélange éventuellement avec des monomères, oligomères et/ou polymères de nature acrylique, les additifs peuvent être notamment des composés éventuellement sous forme de polymères, à hydrogènes mobiles comme des alcools, des glycols et des polyols, utiles pour améliorer la flexibilité du matériau durci après polymérisation et/ou réticulation ; on peut citer par exemple les polycaprolactones-polyols, en particulier le polymère obtenu au départ de 2-éthyl-2-(hydroxyméthyl)-1,3-propane-diol et de 2-oxépanone tel que le produit TONE POLYOL-301 commercialisé par la Société UNION CARBIDE, ou les autres polymères commerciaux TONE POLYOL 201 et TONE POLYOL 12703 de la société UNION CARBIDE. En outre, dans ce cas, on peut citer comme additifs, les diacides à longue chaîne alkyle, les esters gras d'acides insaturés époxydés ou non, par exemple l'huile de soja époxydée ou l'huile de lin époxydée, le 2-éthylhexylester époxydé, le 2-éthylhexyl époxy stéarate, l'époxystéarate d'octyle, les esters acryliques époxydés, les acrylates d'huile de soja époxydés, les acrylates d'huile de lin époxydés, l'éther diglycidique de glycolpolypropylène, les époxydes aliphatiques à longue chaîne.

Il peut s'agir encore, quelle que soit la nature de la matrice polymérisable, par exemple : de charges minérales telles que notamment des fibres synthétiques (polymères) ou naturelles broyées, du carbonate de calcium, du talc, de l'argile, du dioxyde de titane, de la silice de précipitation ou de combustion ; de photosensibilisateurs, notamment à base de thioxanthone (par exemple : isopropylthioxanthone, diéthyl thioxanthone, et chloro-1 propoxy-4 thioxanthone) ; de colorants solubles ; d'inhibiteurs d'oxydation et de corrosion ; de modulateur d'adhérence organosiliciques ou non ; d'agents fongicides, bactéricides, anti-microbiens ; et/ou de tout autre matériau n'interférant pas avec l'activité catalytique de l'amorceur et n'absorbant pas dans la gamme de longueur d'onde choisie pour la photoactivation.

Les Exemples et Tests suivants sont donnés à titre illustratif. Ils permettront notamment de mieux comprendre l'invention et de faire ressortir tous ses avantages et entrevoir quelques unes de ses variantes de réalisation.

### EXEMPLES et TESTS

Les produits utilisés dans les exemples sont les suivants : 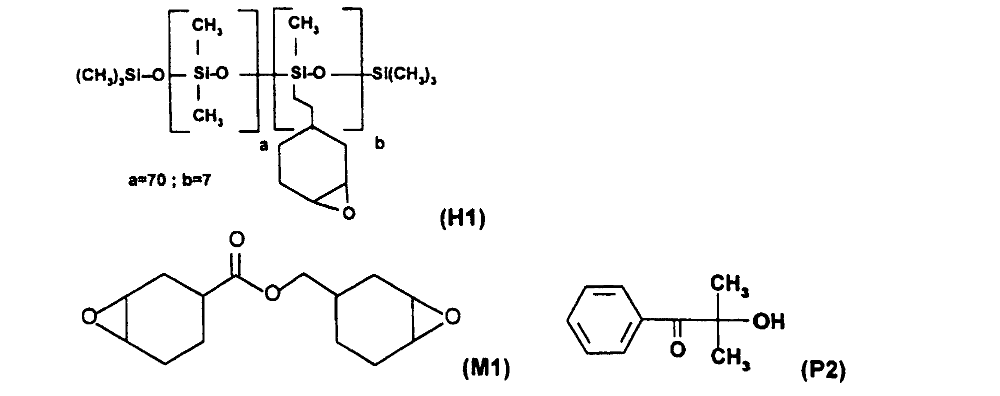 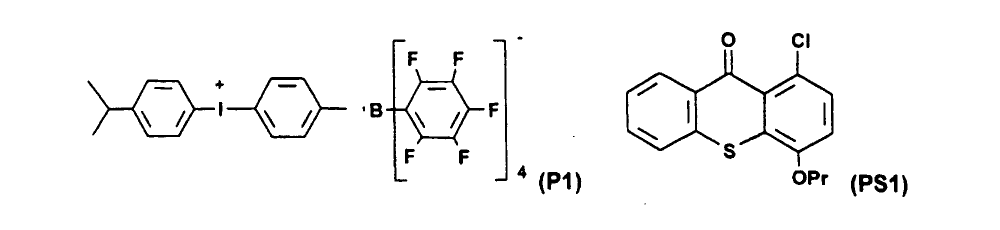
**M1** est un produit commercialisés sous la référence UVR6105 ou UVR6110 par la société UNION CARBIDE.
**P1** est l'amorceur de type borate d'onium, et **P2** est l'amorceur de type benzophénone. Le chloro-1 propoxy-4 thioxanthone est utilisé comme photosensibilisateur **PS1**.

L'alcool utilisée **T1**, est le produit TONE POLYOL 301 de la société UNION CARBIDE.

### Exemple 1 : préparation d'encres blanches

Une base pigmentaire concentrée ("B.P.C") est obtenue par dispersion de 600 parties d'oxyde de titane de type rutile commercialisé sous la référence R960 par la société DUPONT DE NEMOURS, et 400 parties de résine époxyde cycloaliphatique **M1** dans un réacteur de 2 litres muni d'une agitation centrale tripale.

La base pigmentaire concentrée est obtenue par mélange pendant 30 mn avec la poudre d'oxyde de titane coulée auparavant sur la résine **M1** préchauffée à 40°C.

La base pigmentaire est ensuite broyée sur un broyeur tricylindre de façon à obtenir une dispersion dont la granulométrie est inférieure à 10 µm.

Cette base pigmentaire est stable au stockage. A une température pouvant être comprise entre -20°C et 100°C, ses propriétés ne sont pas affectées pendant plusieurs mois.

Quatre solutions d'amorceurs sont préparées :

| Réactifs | Solution 1 | Solution 2 | Solution 3 | Solution 4 |
|---|---|---|---|---|
| P1 | 9,4 | 9,6 | 8 | 7,5 |
| P2 | 0 | 9,6 | 9,5 | 7,5 |
| PS1 | 9,4 | 9,6 | 9,5 | 9 |
| Isopropanol | 15,6 | 4,8 | | 0 |
| M1 | 65,6 | 66,4 | 68,2 | 76 |

A partir de ces quatre solutions d'amorceurs, quatre formulations d'encres blanches sont préparées :

| Réactifs | Formulation 1 | Formulation 2 | Formulation 3 | Formulation 4 |
|---|---|---|---|---|
| Solution 1 | 6,4 | 0 | 0 | 0 |
| Solution 2 | 0 | 6,3 | 0 | 0 |
| Solution 3 | 0 | 0 | 6,3 | 0 |
| Solution 4 | 0 | 0 | 0 | 6,6 |
| M1 | 6,4 | 6,5 | 6,5 | 6,2 |
| B.P.C | 81,7 | 81,7 | 81,7 | 81,7 |
| T1 | 4 | 4 | 4 | 4 |
| BYK361* | 1,5 | 1,5 | 1,5 | 1,5 |
| Total | 100 | 100 | 100 | 100 |
| P1 % | 0,6 | 0,6 | 0,5 | 0,5 |

| | | | | |
|---|---|---|---|---|
| (*Agent de surface commercialisé par la société BYK) | | | | |

Le séchage des encres est évalué sur un banc U.V. de la société IST muni de deux lampes de puissance 200 W/cm : une lampe au mercure dopée gallium et une lampe au mercure non dopée travaillant à puissance maximale.

### Test 1 : résistance aux solvants des encres blanches formulées à l'exemple 1

On mesure la résistance aux solvants des encres obtenues après séchage de films de 12 µm sur une barre d'enduction manuelle de référence n°2 de la société ERICHSEN en notant le nombre d'aller-retours nécessaires effectués à l'aide d'un chiffon imbibé de solvant pour désagréger la couche d'encre après 24 heures de séchage.

Le solvant utilisé est la méthyléthylcétone (MEK).

L'adhésion des couches d'encre est mesurée selon le test normalisé de "*crosshatch NFT30-038*".

| Réactifs (%) | Formulation 1 | Formulation 2 | Formulation 3 | Formulation 4 |
|---|---|---|---|---|
| vitesse limite(m/mn) | 7 | 40 | 25 | 30 |
| V(m/mn) | 3 | 15 | 10 | 15 |
| MEK | >100 | >100 | >100 | >100 |
| Adhésion* | 0 | 0 | 0 | 0 |

La formulation 1 ne renfermant pas d'amorceur radicalaire P2 sèche très difficilement.

Les formulations 2, 3 et 4 comprenant le système amorceur **P1** et **P2** sèchent à des vitesses beaucoup plus élevées, ce qui les rend notamment convenables par exemple pour être utilisées sur une chaîne de fabrication de boîtiers aérosols.

A titre de comparaison, les formulations 1 et 4 ont été préparées en remplaçant l'amorceur **P1** par le photoamorceur **P3**.

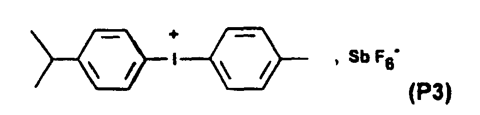

Pour les formulations 1 et 4 avec l'amorceur **P3**, on n'observe aucun séchage pour des concentrations identiques à celle de **P1**.

Pour obtenir un séchage correct, il faut une concentration en photoamorceur **P3** au moins supérieure à 1.5% en poids, avec ou sans amorceur radicalaire **P2**.

En outre, les revêtements obtenus avec une concentration en photoamorceur **P3** supérieure à 1,5% en poids sont colorés (couleur rose).

Le photoamorceur **P3** est donc bien moins performant que le photoamorceur **P1**, l'acide libéré sous rayonnement à partir du sel d'antimoine étant bien moins performant que dans le cas de l'anion borate. En outre, l'ajout de benzophénone **P2** n'améliore pas les performances de l'amorceur **P3**, contrairement aux performances optimisées du couple **P1** et **P2**.

### Exemple 2 : préparations de résines époxydes

Des formulations de résines époxydes pour matériaux composites sont obtenues en mélangeant une solution d'amorceur **P1**, **P2** et le photosensibilisateur **PS1** avec une résine **M2**.

La résine époxyde **M2** est à base de Bisphénol-A diglycidyléther et de ses homologues supérieurs obtenus par condensation du Bisphénol-A- sur l'épichlorhydrine.

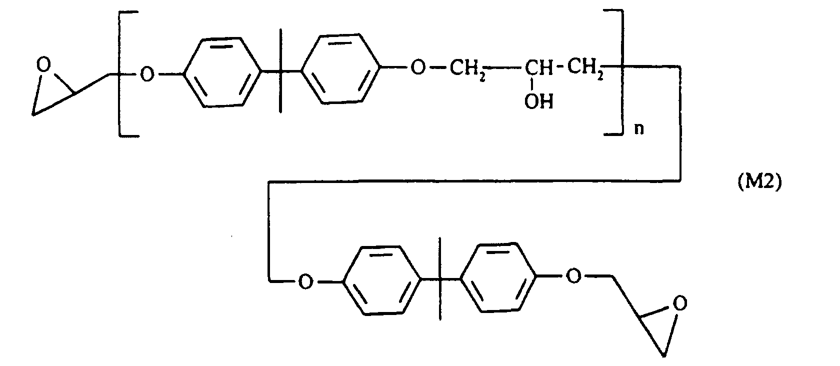

La résine **M2** de viscosité 20 000 mPa.s est diluée avec 13% d'isopropanol ou 13% de méthyléthylcétone afin d'abaisser sa viscosité à environ 300 mPa.s.

On rajoute à 100 parties de résine **M2**, 5,51 parties d'une solution d'amorceur contenant 9,07% de **P1**; 9,07% de **PS1** ; 9,07% de P2 et 72,8% de résine **M1**.

On mélange le tout afin d'obtenir un mélange homogène.

On imprègne ensuite six pièces de tissu de verre de 300 g /m² avec la résine contenant la solution d'amorceur de façon à obtenir après évaporation du solvant, pendant 30 mn, sous vide de 100 mm Hg et à 80°C, un taux d'imprégnation compris entre 30 et 50%.

A ce stade, les pièces de tissus préimprégnées obtenues sont stables à température ambiante et à l'abri de la lumière pendant plusieurs jours, c'est-à-dire, on n'observe pas de polymérisation.

Le séchage des pièces de tissus préimprégnées est ensuite effectué sous U.V. sans traitement thermique ultérieur ou avec un traitement thermique ultérieur.

### A. Séchage avec traitement thermique

On applique à chaque face des 6 tissus préimprégnés une dose U.V. telle que décrite à l'exemple 1 pour une vitesse de défilement du banc U.V. de 30 m/mn.

On empile ensuite les 6 tissus et on presse le tout 10 minutes à 90°C sous 5.10⁵ Pascals.

On obtient après démoulage un matériau composite d'environ 2 mm d'épaisseur dont la température de transition vitreuse mesurée par analyse différentielle calorimétrique est de 120°C.

On visualise également le taux d'époxydes résiduels n'ayant pas réagi en mesurant une éventuelle chaleur de réaction.

Après plusieurs essais de reproductibilité on enregistre un taux d'époxy résiduels inférieur à 10% et le plus souvent inférieur à 5%.

### B. Séchage sous U.V. seul

Les 6 carrés de tissu de verre imprégnés sont maintenus plaqués sur une plaque inox entre deux feuilles de polyester en appliquant un vide aux carrés de 100 mm Hg.

On irradie ensuite l'ensemble maintenu sous vide à travers la feuille polyester pendant cinq secondes avec deux lampes. La première lampe est une lampe Hg/Ga de 200 W/cm utilisée à pleine puissance et la seconde lampe est une lampe Hg de 200 W/cm fonctionnant à 80 W/cm pour ne pas trop sécher en surface.

Après refroidissement à température ambiante, on obtient un matériau composite dont la température de transition vitreuse se situe autour de 120°C et renfermant moins de 10% de fonctions époxydes résiduelles.

### Exemple 3 : préparation de compositions pour vernis organique et. évaluation sur banc U.V.

On étudie la réticulation des formulations 5 et 6 suivantes :

| Réactifs | Formulations 5 | Formulations 6 |
|---|---|---|
| Résine M1 | 84 parties | 84 parties |
| Alcool T1 | 15 parties | 15 parties |
| Agent de surface BYK361 | 1 partie | 1 partie |
| P1 | 0.25 partie | 0.25 partie |
| P2 | 1 partie | 0 partie |
| isopropanol | 0 partie | 1 partie |

A. La réticulation est effectuée en couche épaisse de 2 mm en utilisant une lampe à arc haute pression Hg reliée à une fibre optique de 8 mm de diamètre commercialisée par la société EFOS (Ultracure 100SS).
   La fibre optique est reliée à la cuve de mesure d'un appareillage RAPRA "*Vibrating Needle Curemeter"* (V.N.C.). L'aiguille vibrante plonge dans la matrice époxy (1 cm³) et on mesure une différence de potentiel selon le degré de réticulation à une fréquence donnée de vibration qui est de 40 Hz.
   Lorsqu'on irradie le milieu atteint le point de gel très rapidement. Cela se traduit par une variation du potentiel mesuré. On enregistre la courbe de variation de potentiel tout au long de l'exposition U.V. et on reporte la valeur du temps qui correspond à 95% de la variation totale (= T95).
   Dans le cadre de nos essais, la figure **1**, ci-dessous, indique les résultats enregistrés au RAPRA en couche épaisse pour les formulations 5 et 6. Selon cette figure T95 de la formulation 5 avec la benzophénone **P2** est très inférieur à celui de la formulation 6 sans benzophénone **P2**, ce qui signifie que le système amorceur **P2** et **P1** active fortement la réticulation. 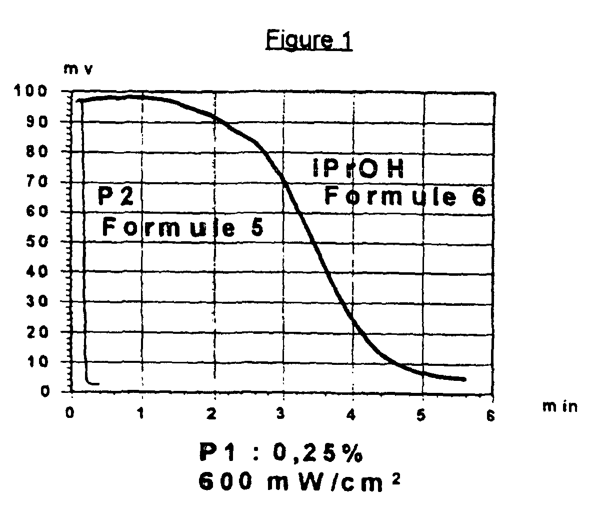
**B**. Des films de 12 µm ont été préparés avec un support polyester sur une barre d'enduction manuelle de référence n°2 de la société ERICHSEN . Les résultats conduisent aux mêmes conclusions que précédemment, c'est-à-dire le système benzophénone **P2** et borate d'onium **P1** accélère fortement la réticulation; en effet, en accord avec la figure 2, la vitesse de séchage de la formulation 5 est deux fois plus élevée que celle de la formulation 6.

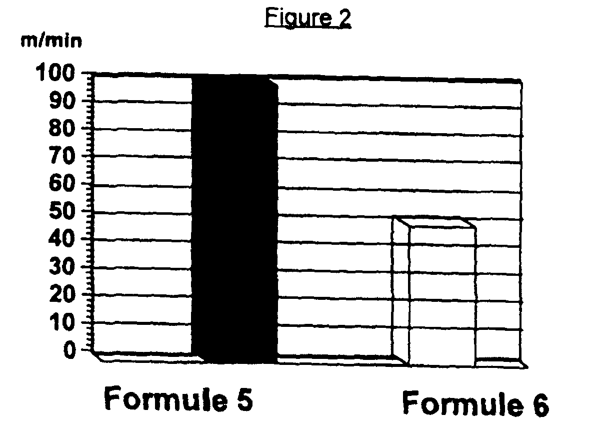

### Exemple 4 : préparation de composition pour vernis silicone et évaluation sur banc U.V.

Une formulation 7 de silicone photoréticulable est préparée en mélangeant 100 parties d'une huile silicone **H1** avec deux parties d'une solution à 20% d'amorceur **P1** dans l'amorceur **P2**.

Cette formulation 7 est homogénéisée pendant cinq minutes par agitation magnétique.

On évalue alors le potentiel de séchage de cette formulation 7 sous la forme d'un revêtement de 1 micromètre sur un papier de type glassine (SIBILLE) avec une vitesse de défilement de 100 m/mn en présence d'une source U.V. mercure à arc avec une puissance de 120 W/cm. On a alors :
- une dose de 0.05 J/cm² ; U.V.-A (320-390 nm)
- une dose de 0.04 J/cm²; U.V.-B (280-320 nm)
- et une dose de 0.005 J/cm²; U.V.-C (250-260 nm).

La formulation silicone 7 sèche parfaitement et on n'observe aucune trace au doigt. Le revêtement obtenu ne présente aucune tendance au gommage lorsqu'on le soumet à un test de friction avec l'index sur plus de dix aller-retours.

A titre comparatif, on prépare une formulation silicone 7' sans amorceur **P2**, en mélangeant 100 parties d'une huile silicone **H1** avec deux parties d'une solution à 20% d'amorceur **P2** dans l'isopropanol. Le séchage obtenu est bon, toutefois, on observe une nette tendance au gommage lorsqu'on soumet le support siliconé au test de friction avec l'index.

### Exemple 5 : composition pour vernis silicone et évaluation de son degré de réticulation

La composition à base de silicone est identique à celle de la formulation 7. A titre de comparaison, une formulation 7" sans amorceur **P2** est préparée en mélangeant 100 parties d'une huile silicone **H1** avec 2 parties d'une solution à 20% d'amorceur **P2** dans le diacétone alcool.

Les tests ont été réalisés à l'aide d'un appareil d'enduction sur papier équipée d'une lampe FUSION H travaillant à 120W/ cm.
i) Après enduction sur papier de type glassine (SIBILLE) à une vitesse de 100 m/mn, on mesure les matières extractibles dans l'hexane. Pour la formulation 7, on obtient seulement 4% de matières extractibles tandis que pour la formulation 7", on obtient 11,3% de matières extractibles ; ce qui signifie que la réticulation du revêtement est plus importante à partir de la formulation 7.
ii) les papiers enduits obtenus respectivement à partir de la formulation 7 et de la formulation 7" sont ensuite mis en contact avec un papier adhésif TESA 4970. Les forces de pelage ont été mesurées après 20 heures et 6 jours à une température de 70°C.

Pour le papier enduit à partir de la formulation 7, la force de pelage est de 30 g/m après 20 heures, et de 40 g/m après 6 jours.

Pour le papier enduit à partir de la formulation 7", la force de pelage est de 30 g/m après 20 heures, et de 80 g/m après 6 jours.

### Exemple 6 : composition pour vernis silicone et évaluation sur banc U.V.

1) Préparation des solutions d'amorceur(s) suivantes : 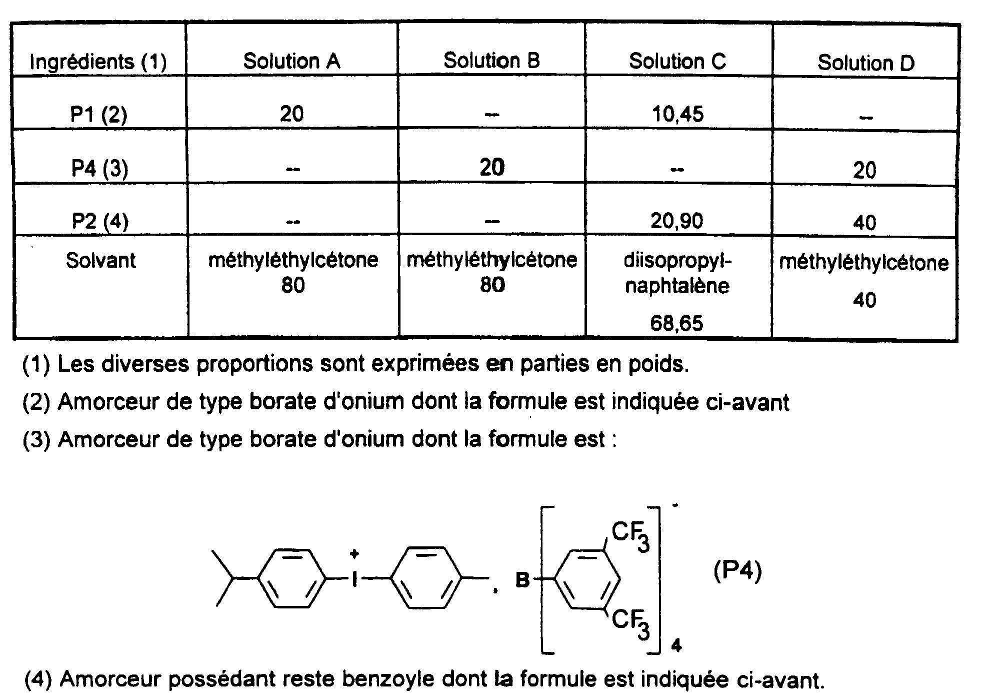
2) A partir de ces quatre solutions d'amorceur(s), quatre formulations (numérotées 8, 9, 10 et 11) de vernis organique sont préparées :

| Ingrédients (5) | Formulation 8 (témoin) | Formulation 9 (témoin) | Formulation 10 | Formulation 11 |
|---|---|---|---|---|
| Résine époxyde M3(6) | 80 | 80 | 80 | 84 |
| Diisopropylnaphtalène | 20 | 20 | 20 | 16 |
| Solution (A, B, C ou D) | Solution A 2 | Solution B 2 | Solution C 4 | Solution D 2 |
| P1 (7) | 0,5 % | - | 0,52 % | - |
| P4 (7) | - | 0,5 % | - | 0,48 % |
| P2 (7) | - | - | 1,05 % | 0,95 % |

| | | | | |
|---|---|---|---|---|
| (5) Les diverses proportions sont exprimées en parties en poids. | | | | |
| (6) Polymère diénique linéaire, époxydé et monohydroxylé, obtenu par époxydation du polymère diénique de base de structure Is-EtBu-OH, possédant 1,49 milliéquivalents de fonction époxyde et 0,17 milliéquivalent de fonction OH par gramme ; ce polymère diénique époxydé et hydroxylé est commercialisé par la société SHELL sous la dénomination KRATON® EKP 207. | | | | |
| (7) On indique ici le pourcentage en poids d'amorceur exprimé par rapport à la matrice M3 à photopolymériser. | | | | |

Des essais de réticulation en couche épaisse de 2 mm sont réalisés sur un appareil RAPRA en reproduisant le mode opératoire décrit ci-avant dans l'exemple 3, partie A.
Les résultats obtenus, exprimés en terme de T95, sont rassemblés dans le tableau suivant :

| | | | | |
|---|---|---|---|---|
| Formulation | 8 | 9 | 10 | 11 |
| T 95 en minutes | 1,5 | 1,6 | 0,5 | 1 |

On peut observer que l'emploi du co-amorceur à reste benzoyle P2 active fortement les amorceurs P1 (formulation 10) et P4 (formulation 11).
3) Test de réactivité en couche mince :
La solution C décrite ci-avant au §1) est utilisée à raison de 1 partie en poids pour 100 parties en poids de matrice époxyde M3. On mélange avec le système photoamorceur de façon à obtenir un mélange limpide.
On sèche un film de 12 µm appliqué sur une feuille d'aluminium d'épaisseur 0,1 mm à l'aide d'un convoyeur équipé d'une lampe au mercure à arc fonctionnant à 80 W/cm à une vitesse de 100 m/min. Le produit est non collant en surface ("tack-free") en sortie de machine.
Un essai comparatif est réalisé en l'absence d'amorceur P2 à reste benzoyle, au départ de la solution A. Le produit est collant en surface ("tacky") en sortie de machine.

## Revendications

1. Système amorceur de polymérisation et/ou de réticulation comprenant :
(1) au moins un borate d'onium dont:
(i) l'entité cationique est choisie parmi les sels d'onium de formule **(I)**
[(R¹)ₙ- I -(R²)ₘ]⁺ (I)
formule dans laquelle :
- les radicaux **R**^{**1**}, identiques ou différents, représentent un radical aryle carbocyclique ou hétérocyclique en C₆-C₂₀, ledit radical hétérocyclique pouvant contenir comme hétéroéléments de l'azote et/ou du soufre,
- les radicaux **R**^{**2**}, identiques ou différents, représentent R¹, un radical alkyle linéaire ou ramifié en C_{**1**}-C₃₀ , ou un radical alkényle linéaire ou ramifié en C₃₀ au maximum ;
- lesdits radicaux R¹ et R² étant éventuellement substitués par :
. un groupement alkyle linéaire ou ramifié en C₁-C₂₅,
. un groupement alcoxy OR¹³,
. un groupement cétonique -(C=O)-R¹³
. un groupement ester ou carboxylique -(C=O)-O- R¹³,
. un groupement mercapto SR¹³,
. un groupement mercapto SOR¹³,
. R¹³ étant un radical choisi parmi le groupe constitué d'un atome d'hydrogène, un radical alkyle linéaire ou ramifié en C₁-C₂₅, un radical aryl en C₆-C₃₀, ou un radical alkylaryl dont la partie alkyle est linéaire ou ramifiée en C₁-C₂₅ et la partie aryle est en C₆-C₃₀,
. un groupement nitro,
. un atome de chlore,
. un atome de brome,
. et/ou un groupement cyano,
- n est un nombre entier allant de 1 à v+1, v étant la valence de l'iode,
- m est un nombre entier allant de 0 à v, avec n + m = v+1 ;
**(ii)** et en ce que l'entité anionique borate a pour formule (**II**) :
[B Xₐ R³ _{b}]⁻ (II)
dans laquelle:
- a et b sont des nombres entiers tels que 0 ≤ a< 4, 0 < b ≤ 4, et a + b = 4,
- les symboles X, identiques ou différents, représentent :
. un atome d'halogène choisi parmi le chlore et/ou le fluor avec 0 ≤ a ≤ 3,
. une fonction OH avec 0≤a≤2,
- et les radicaux **R**^{**3**}, identiques ou différents, représentent :
. un radical phényle substitué par au moins un groupement électroattracteur tel que -CF₃, -OCF₃, -NO₂, CN, -SO₂R¹⁴, - O(C=O)-R¹⁴, -O-CₙF₂ₙ₊₁, -CₙF₂ₙ₊₁, n étant un nombre entier compris entre 1 et 20 ou substitué par au moins 2 atomes d'halogène, en particulier le fluor,
. un radical aryle contenant au moins deux noyaux aromatiques tel que biphényle, naphtyle, éventuellement substitué par au moins un atome d'halogène, notamment un atome de fluor ou un groupement électroattracteur tel que -CF₃, -OCF₃, -NO₂, -CN, -SO₂R¹⁴, - O(C=O)-R¹⁴, **R**^{**14**} étant -O-CₙF₂ₙ₊₁, -CₙF₂ₙ₊₁, n étant un nombre entier compris entre 1 et 20 ;
**(2)** et au moins une benzophénone :
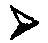 répondant à l'une des formules **(III)** à **(VI)** suivantes : 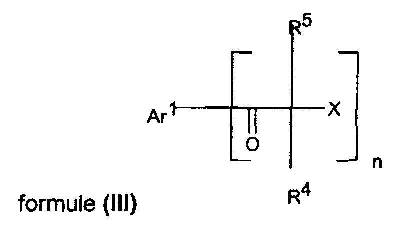 dans laquelle :
- lorsque n = 1, **Ar**^{**1**} représente un radical aryle contenant de 6 à 18 atomes de carbone, un radical tétrahydronaphtyle, thiényle, pyridyle ou furyle ou un radical phényle porteur d'un ou plusieurs substituants choisis dans le groupe constitué de F, Cl, Br, CN, OH, les alkyles linéaires ou ramifiés en C₁-C₁₂, -CF³, -OR⁶, -OPhényle, -SR⁶, -SPhényle, -SO₂Phényle, -COOR⁶, -O-(CH₂-CH=CH₂), -O(C₂H₄-O)ₘ-H, -O(C₃H₆O)ₘ-H, m étant compris entre 1 et 100.
- lorsque n = 2, **Ar**_{**1**} représente un radical arylène en C₆-C₁₂ ou un radical phénylène-T-phénylène, où T représente -O-, -S-, -SO₂- ou -CH₂-,
- **X** représente un groupe -OR⁷ ou -OSiR⁸(R⁹)₂ ou forme, avec R⁴, un groupe -O-CH(R¹⁰)-,
- **R**_{**4**} représente un radical alkyle linéaire ou ramifié en C₁-C₈ non substitué ou porteur d'un groupe -OH, -OR⁶, acyloxy en C₂-C₈, -COOR⁶, -CF³, ou - CN, un radical alcényle en C₃ ou C₄, un radical aryle en C₆ à C₁₈, un radical phénylalkyle en C₇ à C₉,
- **R**^{**5**} a l'une des significations données pour **R**^{**4**} ou représente un radical -CH₂CH₂R¹¹, ou encore forme avec R⁴, un radical alkylène en C₂-C₈ ou un radical oxa-alkylène ou aza-alkylène en C₃-C₉,
- **R**^{**6**} représente un radical alkyle inférieur contenant de 1 à 12 atomes de carbone,
- **R**^{**7**} représente un atome d'hydrogène, un radical alkyle en C₁-C₁₂, un radical alkyle en C₂-C₆ porteur d'un groupe -OH, -OR⁶ ou -CN, un radical alcényle en C₃-C₆, un radical cyclohexyle ou benzyle, un radical phényle éventuellement substitué par un atome de chlore ou un radical alkyle linéaire ou ramifié en C₁-C₁₂, ou un radical tétrahydropyrannyle-2,
- **R**^{**8**} et **R**^{**9**} sont identiques ou différents et représentent chacun un radical alkyle en C₁-C₄ ou un radical phényle,
- **R**^{**10**} représente un atome d'hydrogène, un radical alkyle en C₁-C₈ ou un radical phényle,
- **R**^{**11**} représente un radical -CONH₂, -CONHR⁶, -CON(R⁶)₂, -P(O)(OR⁶)₂ ou pyridyle-2 ; 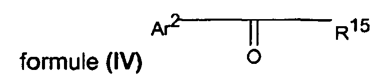
dans laquelle :
- Ar² a la même signification que Ar¹ de la formule (III) dans le cas où n = 1,
- **R**^{**15**} représente un radical choisi parmi le groupe constitué d'un radical **Ar**^{**2**}, un radical -(C=O)-**Ar**^{**2**}, un radical alkyle linéaire ou ramifié en C₁-C₁₂, un radical cycloalkyle en C₆-C₁₂, et un radical cycloalkyle formant un cycle en C₆-C₁₂ avec le carbone de la cétone ou un carbone du radical **Ar**^{**2**}, ces radicaux pouvant être substitués par un ou plusieurs substituants choisis dans le groupe constitué de -F, -Cl, -Br, -CN, -OH,
- CF₃,, -OR⁶, -SR⁶, -COOR⁶, les radicaux alkyles linéaires ou ramifiés en C₁-C₁₂ porteur éventuellement d'un groupe -OH, -OR⁶ et/ou -CN, et les radicaux alcényles linéaires ou ramifiés en C₈ maximum ; 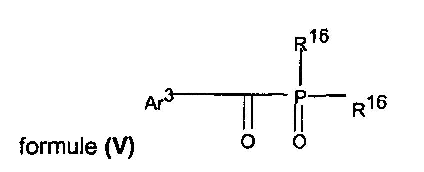
dans laquelle :
- **Ar**^{**3**} a la même signification que **Ar**^{**1**} de la formule (III) dans le cas où n=1.
- **R**^{**16**}, identiques ou différents, représentent un radical choisi parmi le groupe constitué d'un radical **Ar**^{**3**}, un radical -(C=O)-**Ar**^{**3**}, un radical alkyle linéaire ou ramifié en **C**_{**1**}**-C**_{**12**}, un radical cycloalkyle en C₆-C₁₂, ces radicaux pouvant être substitués par un ou plusieurs substituants choisis dans le groupe constitué de -F, -Cl, -Br, -CN, -OH, -CF₃,, -OR⁶, -SR⁶, -COOR⁶, les radicaux alkyles linéaires ou ramifiés en C₁-C₁₂ porteur éventuellement d'un groupe -OH, -OR⁶ et/ou -CN, et les radicaux alcényles linéaires ou ramifiés en C₈ maximum ; 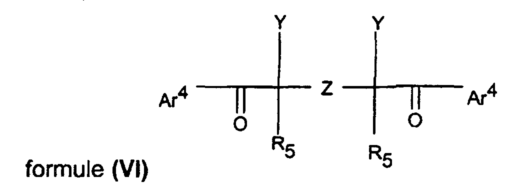
dans laquelle :
- **R**^{**5**}, identiques ou différents, ont les même significations que dans la formule (**III**),
- **Y**, identiques ou différents, représentent **X** et/ou **R**^{**4**}^{.}
- **Z** représente :
. une liaison directe,
. un radical divalent alkylène en C₁-C₆, ou un radical phénylène, diphénylène ou phénylène-T-phénylène, ou encore forme, avec les deux substituants **R**^{**5**} et les deux atomes de carbone porteurs de ces substituants, un noyau de cyclopentane ou de cyclohexane,
. un groupe divalent -O-R¹²-O-, -O-SiR⁸R⁹-O-SiR⁸R⁹-O-, ou -O-SiR⁸R⁹-O-,
- **R**^{**12**} représente un radical alkylène en C₂-C₈, alcénylène en C₄-C₆ ou xylylène.
- et **Ar**^{**4**} a la même signification que **Ar**^{**1**} de la formule (II) dans le cas où n=1 ;
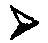 ou correspondant au dibenzoylperoxyde.

2. Système amorceur selon la revendication 1, **caractérisé en ce que** le rapport en poids borate d'onium/benzophénone est compris entre 0,1 et 10.

3. Système amorceur selon la revendication 1, **caractérisé en ce que** l'entité anionique du borate d'onium est choisie parmi le groupe constitué de [B (C₆F₅)₄]⁻, [B (C₆H₃(CF₃)₂)₄]⁻, [B (C₆H₄OCF₃)₄]⁻, [B (C₆H₄CF₃)₄]⁻, [(C₆F₅)₂ B F₂]⁻, [C₆F₅ B F₃]⁻, [B (C₆H₃F₂)₄]⁻, et leur mélange.

4. Système amorceur selon l'une des revendications précédentes, **caractérisé en ce que** l'entité anionique du sel d'onium est choisie parmi [B(C₆F₅)₄]⁻, [B (C₆H₃(CF₃)₂)₄]⁻, [B (C₆H₄OCF₃)₄]⁻ et leur mélange.

5. Système amorceur selon l'une quelconque des revendications précédentes, **caractérisé en ce que** l'entité cationique du borate d'onium est choisie parmi le groupe constitué de :
[(C₆H₅)₂ I]⁺, [C₈H₁₇ - O - C₆H₅ - I -C₆H₅]⁺,
[C₁₂H₂₅ - C₆H₅ - I - C₆H₅]⁺, [(C₈H₁₇ O - C₆H₅)₂ I]⁺,
[(C₈H₁₇) - O - C₆H₅ - I - C₆H₅)]^{+,} [(C₁₂H₂₅ - C₆H₅)₂ I]⁺,
[(CH(CH₃)₂-C₆H₅)- I -C₆H₅- CH₃]⁺, [C₆H₄-O-C₆H₄- I -C₆H₄]^{+,}
[C₆H₄-(C=O)-C₆H₄- I - C₆H₄]^{+,} [C₆H₄-O-C₆H₄- I -C₆H₄-O-C₆H₄]⁺
[C₆H₄-(C=O)-C₆H₄ -I-C₆H₄-(C=O)-C₆H₄]^{+,}
et leur mélange.

6. Système amorceur selon l'une quelconque des revendications précédentes, **caractérisé en ce que** la benzophénone est choisie parmi le groupe constitué de :
4,4'diméthoxybenzoïne ; phénanthrènequinone;
2-éthylanthraquinone ; 2-méthylanthraquinone ;
1,8-dihydroxyanthraquinone ;
2,2-diméthoxy-2-phénylacétophénone ; benzoïne ;
2-hydroxy-2méthylpropiophénone ; benzaldéhyde ;
4-(2-hydroxyéthoxy)phényl-(2-hydroxy-2-méthylpropyl) cétone ;
benzoylacétone; 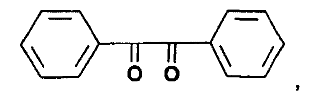 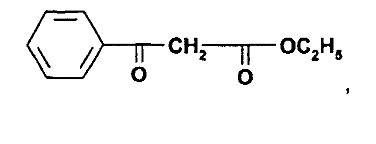 et leur mélange.

7. Composition polymérisable et/ou réticulable par voie cationique sous activation thermique, photochimique ou de faisceau d'électrons, comprenant au moins une matrice à base de monomères, d'oligomères et/ou de polymères polymérisables et/ou réticulables par voie cationique et une quantité catalytiquement efficace d'au moins un système amorceur selon l'une quelconque des revendications 1 à 6.

8. Composition selon la revendication 7, **caractérisée en ce que** les monomères, oligomères et/ou polymères sont de nature organique et/ou de nature polyorganosiloxanique ; les groupements organofonctionnels étant des groupements époxydes, alkényléthers et/ou acryliques.

9. Composition selon l'une quelconque des revendications 7 et 8, **caractérisée en ce que** les monomères, oligomères et polymères à groupements organofonctionnels sont de nature polyorganosiloxanique, et constitués de motifs de formule (VII) et terminés par des motifs de formule (VIII) ou cycliques constitués de motifs de formule (VII) représentées ci-dessous : 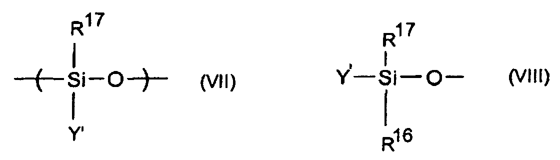 dans lesquelles :
- R¹⁶ est un radical alkyle linéaire ou ramifié en C₁-C₃₀ ;
- les symboles **R**^{**17**} sont semblables ou différents et représentent :
. un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
. un radical cycloalkyle contenant entre 5 et 8 atomes de carbone cycliques, éventuellement substitué,
. un radical aryle contenant entre 6 et 12 atomes de carbone pouvant être substitué, de préférence phényle ou dichlorophényle,
. une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alkoxyles contenant 1 à 3 atomes de carbone,
- les symboles **Y'** sont semblables ou différents et représentent :
. le groupement **R**^{**17**},
. un radical hydrogène,
. et/ou un groupement organofonctionnel réticulable par voie cationique, de préférence un groupement époxyfonctionnel et/ou vinyloxyfonctionnel, relié au silicium du polyorganosiloxane par l'intermédiaire d'un radical divalent contenant de 2 à 20 atomes de carbone et pouvant contenir au moins un hétéroatome, de préférence de l'oxygène,
. et l'un au moins des symboles **Y'** représentant un groupement organique fonctionnel réticulable par voie cationique.

10. Composition selon la revendication 9, **caractérisée en ce que** au moins un des symboles **R**^{**17**} des polyorganosiloxanes utilisés représente un radical phényle, tolyle ou dichlorophényle.

11. Composition selon l'une quelconque des revendications 7 et 8, **caractérisée en ce que** les monomères, oligomères et/ou polymères, de nature organique, à groupements organofonctionnels appartiennent à au moins l'une des espèces suivantes :
- **α**_{**1.1**} les époxydes cycloaliphatiques, pris à eux seuls ou en mélange entre eux,
- α_{**1.2**} les époxydes non cycloaliphatiques, pris à eux seuls ou en mélange entre eux,
- **α3** les polyols : pris à eux seuls ou en mélange entre eux,
- **α**_{**2**} les alcényl-éthers, linéaires ou cycliques, pris à eux seuls ou en mélange entre eux.

12. Composition selon la revendication 11, **caractérisée en ce que** les monomères , oligomères et/ou polymères de nature organique, sont choisis dans le groupe formé par:
- les espèces **α**_{**1.1**} consistant dans le 3,4-époxycyclohexylméthyl-3',4'-époxycyclohexane carboxylate ou le bis(3,4-époxycyclohéxyl)adipate ;
- les espèces **α**_{**1.2**} consistant dans :
. les époxydes du type de ceux résultant de la condensation de bis-phénol A éventuellement alkoxylé et d'épichlorhydrine et éventuellement de 1,6-hexanediol, de glycérol, de néopentylglycol et de propane triméthylol,
. les époxydes NOVOLAC,
. les polymères diéniques époxydés et monohydroxylés, saturés ou insaturés ;
- les espèces **α**_{**2**} consistant dans les vinyl-éthers, les propényl-éthers et les butényl-éthers.

13. Composition selon l'une quelconque des revendications 9 et 10, **caractérisée en ce que** la composition polymérisable et/ou réticulable comprend en outre des monomères, oligomères et/ou polymères à groupements organofonctionnels définis en accord avec la revendication 11 ou 12.

14. Composition selon l'une quelconque des revendications 7 à 13, **caractérisée en ce que** la composition réticulable comprend de plus, des monomères, oligomères et/ou polymères à groupements organofonctionnels d'espèce acrylate; et notamment acrylates époxydés, acrylo-glycéro-polyesters, acrylates multifonctionnels, acrylo-uréthanes, acrylo-polyéthers, acrylo-polyesters, polyesters insaturés, acrylo-acryliques,

15. Résine susceptible d'être obtenue à partir d'une composition selon l'une quelconque des revendications 7 à 14.

16. Revêtement à base de résine selon la revendication 15.

17. Revêtement selon la revendication 16, **caractérisé en ce que** le revêtement est une encre.

18. Matériau composite susceptible d'être obtenu à partir d'une composition selon l'une quelconque des revendications 7 à 14.

19. Utilisation d'une composition selon l'une quelconque des revendications 7 à 14 pour la fabrication de revêtements ou de matériaux composites.

## Claims

1. Initiator system for polymerization and/or crosslinking, comprising:
(1) at least one onium borate in which:
(i) the cationic species is chosen from the onium salts of formula (I)
[(R¹)ₙ-I-(R²)ₘ]⁺ (I)
in which formula:
- the radicals R¹, which may be identical or different, represent a carbocyclic or heterocyclic C₆-C₂₀ aryl radical, it being possible for the said heterocyclic radical to contain nitrogen and/or sulphur as hetero elements,
- the radicals R², which may be identical or different, represent R¹, a linear or branched C₁-C₃₀ alkyl radical or a linear or branched alkenyl radical of no greater than C₃₀,
- the said radicals R¹ and R² optionally being substituted with:
• a linear or branched C₁-C₂₅ alkyl group,
• an alkoxy group OR¹³,
• a ketone group -(C=O)-R¹³,
• an ester or carboxylic group -(C=O)-O-R¹³,
• a mercapto group SR¹³,
• a mercapto group SOR¹³,
• R¹³ being a radical chosen from the group consisting of a hydrogen atom, a linear or branched C₁-C₂₅ alkyl radical, a C₆-C₃₀ aryl radical and an alkylaryl radical in which the alkyl portion is linear or branched and C₁-C₂₅ and the aryl portion is C₆-C₃₀,
• a nitro group,
• a chlorine atom,
• a bromine atom, arid/or
• a cyano group,
- n is an integer ranging from 1 to v+1, v being the valency of iodine,
- m is an integer ranging from 0 to v, with n + m = v+1;
(ii) and in that the anionic borate species has the formula (II):
[B Xₐ R³ _{b}]⁻ (II)
in which:
- a and b are integers such that 0 ≤ a < 4, 0 < b ≤ 4, and a + b = 4,
- the symbols X, which may be identical or different, represent:
• a halogen atom chosen from chlorine and/or fluorine with 0 ≤ a ≤ 3,
• an OH function with 0 ≤ a ≤ 2, and
- the radicals R³, which may be identical or different, represent:
• a phenyl radical substituted with at least one electron-withdrawing group such as -CF₃, -OCF₃, -NO₂, -CN, -SO₂R¹⁴, -O(C=O)-R¹⁴, -O-CₙF₂ₙ₊₁, -CₙF₂ₙ₊₁, n being an integer between 1 and 20, or substituted with at least two halogen atoms, in particular fluorine atoms,
• an aryl radical containing at least two aromatic nuclei, such as biphenyl or naphthyl, optionally substituted with at least one halogen atom, in particular a fluorine atom, or with an electron-withdrawing group such as -CF₃, -OCF₃, -NO₂, -CN, -SO₂R¹⁴, -O(C=O)-R¹⁴, R¹⁴ being -O-CₙF₂ₙ₊₁, -CₙF₂ₙ₊₁, n being an integer between 1 and 20;
(2) and at least one benzophenone:
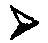 corresponding to one of the formulae (III) to (VI) below: 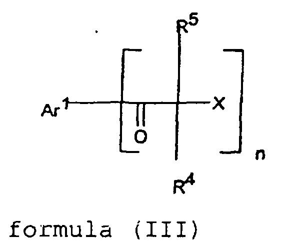 in which:
- when n = 1, Ar¹ represents an aryl radical containing from 6 to 18 carbon atoms, a tetrahydronaphthyl, thienyl, pyridyl or furyl radical or a phenyl radical bearing one or more substituents chosen from the group consisting of F, Cl, Br, CN, OH, linear or branched C₁-C₁₂ alkyls, -CF³, -OR⁶, -Ophenyl, -SR⁶, -Sphenyl, -SO₂phenyl, -COOR⁶, -O-(CH₂-CH=CH₂), -O(C₂H₄-O)ₘ-H, -O(C₃H₆O)ₘ-H, m being between 1 and 100,
- when n = 2, Ar₁ represents a C₆-C₁₂ arylene radical or a phenylene-T-phenylene radical, in which T represents -O-, -S-, -SO₂- or -CH₂-,
- X represents a group -OR⁷ or -OSiR⁸(R⁹)₂ or forms, with R⁴, a group -O-CH(R¹⁰)-,
- R₄ represents a linear or branched C₁-C₈ alkyl radical which is unsubstituted or bears a group -OH, -OR⁶, C₂-C₈ acyloxy, -COOR⁶, -CF³ or -CN, a C₃ or C₄ alkenyl radical, a C₆ to C₁₈ aryl radical or a C₇ to C₉ phenylalkyl radical,
- R⁵ has one of the meanings given for R⁴ or represents a radical - CH₂CH₂R¹¹, or alternatively forms, with R⁴, a C₂-C₈ alkylene radical or a C₃-C₉ oxa-alkylene or aza-alkylene radical,
- R⁶ represents a lower alkyl radical containing from 1 to 12 carbon atoms,
- R⁷ represents a hydrogen atom, a C₁-C₁₂ alkyl radical, a C₂-C₆ alkyl radical bearing a group - OH, -OR⁶ or -CN, a C₃-C₆ alkenyl radical, a cyclohexyl or benzyl radical, a phenyl radical optionally substituted with a chlorine atom or a linear or branched C₁-C₁₂ alkyl radical or a 2-tetrahydropyranyl radical,
- R⁸ and R⁹ are identical or different and each represent a C₁-C₄ alkyl radical or a phenyl radical,
- R¹⁰ represents a hydrogen atom, a C₁-C₈ alkyl radical or a phenyl radical,
- R¹¹ represents a -CONH₂, -CONHR⁶, - CON(R⁶)₂, -P(O)(OR⁶)₂ or 2-pyridyl radical; 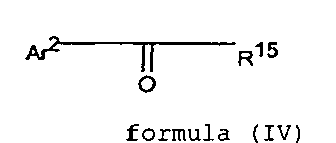 in which:
- Ar² has the same meaning as Ar¹ in formula (III) in the case in which n = 1,
- R¹⁵ represents a radical chosen from the group consisting of a radical Ar², a radical -(C=O)-Ar², a linear or branched C₁-C₁₂ alkyl radical, a C₆-C₁₂ cycloalkyl radical and a cycloalkyl radical forming a C₆-C₁₂ ring with the carbon of the ketone or a carbon of the radical Ar², it being possible for these radicals to be substituted with one or more substituents chosen from the group consisting of -F, -Cl, - Br, -CN, -OH, -CF₃, -OR⁶, -SR⁶, -COOR⁶, linear or branched C₁-C₁₂ alkyl radicals optionally bearing a -OH, -OR⁶ and/or -CN group; and linear or branched alkenyl radicals of no greater than C₈; 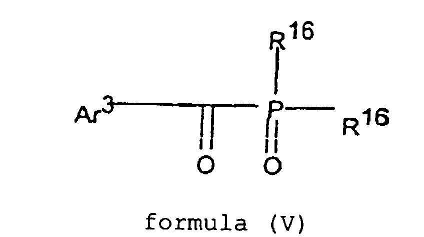
in which
- Ar³ has the same meaning as Ar¹ in formula (III) in the case in which n=1,
- R¹⁶, which may be identical or different, represent a radical chosen from the group consisting of a radical Ar³, a radical -(C=O)-Ar³, a linear or branched C₁-C₁₂ alkyl radical, a C₆-C₁₂ cycloalkyl radical, it being possible for these radicals to be substituted with one or more substituents chosen from the group consisting of -F, -Cl, -Br, -CN, -OH, -CF₃, -OR⁶, -SR⁶, -COOR⁶, linear or branched C₁-C₁₂ alkyl radicals optionally bearing a group -OH, -OR⁶ and/or -CN, and linear or branched alkenyl radicals of no greater than C₈; 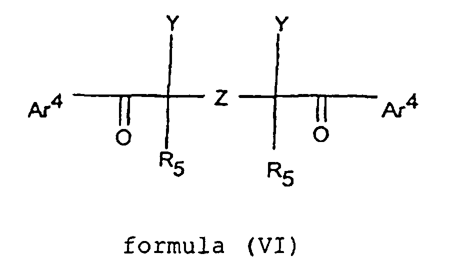
in which:
- R⁵, which may be identical or different, have the same meanings as in formula (III),
- Y, which may be identical or different, represent X and/or R⁴,
- Z represents:
• a direct bond,
• a C₁-C₆ divalent alkylene radical, or a phenylene, diphenylene or phenylene-T-phenylene radical, or alternatively forms, with the two substituents R⁵ and the two carbon atoms bearing these substituents, a cyclopentane or cyclohexane nucleus,
• a divalent group -O-R¹²-O-, -O-SiR⁸R⁹-O-SiR⁸R⁹-O- or - O-SiR⁸R⁹-O-,
- R¹² represents a C₂-C₈ alkylene, C₄-C₆ alkenylene or a xylylene radical, and
- Ar⁴ has the same meaning as Ar¹ in formula (III) in the case in which n=1;
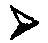 or corresponding to dibenzoylperoxide.

2. Initiator system according to Claim 1, **characterized in that** the onium borate/benzophenone weight ratio is between 0.1 and 10.

3. Initiator system according to Claim 1, **characterized in that** the anionic species of the onium borate is chosen from the group consisting of [B(C₆F₅)₄]⁻, [B(C₆H₃(CF₃)₂)₄]⁻, [B(C₆H₄OCF₃)₄]⁻, [B(C₆H₄CF₃)₄]⁻, [(C₆F₅)₂BF₂]⁻, [C₆F₅BF₃]⁻, [B(C₆H₃F₂)₄]⁻, and a mixture thereof.

4. Initiator system according to one of the preceding claims, **characterized in that** the anionic species of the onium salt is chosen from [B(C₆F₅)₄]⁻, [B(C₆H₃(CF₃)₂)₄]⁻, [B(C₆H₄OCF₃)₄]⁻, and a mixture thereof.

5. Initiator system according to any one of the preceding claims, **characterized in that** the cationic species of the onium borate is chosen from the group consisting of: [(C₆H₅)₂I]⁺, [C₈H₁₇-O-C₆H₅-I-C₆H₅]⁺, [C₁₂H₂₅-C₆H₅-I-C₆H₅]⁺, [(C₈H₁₇-O-C₆H₅)₂I]⁺, [(C₈H₁₇)-O-C₆H₅-I-C₆H₅)]⁺, [C₁₂H₂₅-C₆H₅)₂I]⁺, [(CH(CH₃)₂-C₆H₅)-I-C₆H₅-CH₃]⁺, [C₆H₄-O-C₆H₄-I-C₆H₄]⁺, [C₆H₄-(C=O)-C₆H₄-I-C₆H₄]⁺, [C₆H₄-O-C₆H₄-I-C₆H₄-O-C₆H₄]⁺, [C₆H₄-(C=O)-C₆H₄-I-C₆H₄-(C=O)-C₆H₄]⁺, and a mixture thereof.

6. Initiator system according to any one of the preceding claims, **characterized in that** the benzophenone is chosen from the group consisting of: 4,4'-dimethoxybenzoin; phenanthrenequinone; 2-ethylanthraquinone; 2-methylanthraquinone; 1,8-dihydroxyanthraquinone; 2,2-dimethoxy-2-phenylacetophenone; benzoin; 2-hydroxy-2-methylpropiophenone; benzaldehyde; 4-(2-hydroxyethoxy)phenyl 2-hydroxy-2-methylpropyl ketone; benzoylacetone; 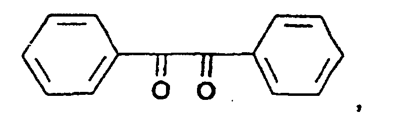 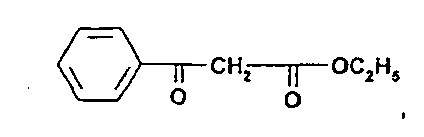 and a mixture thereof.

7. Composition which can be polymerized and/or crosslinked cationically under thermal or photochemical activation or under activation with a beam of electrons, comprising at least one matrix based on monomers, oligomers and/or polymers which can be polymerized and/or crosslinked cationically and a catalytically effective amount of at least one initiator system according to any one of Claims 1 to 6.

8. Composition according to Claim 7, **characterized in that** the monomers, oligomers and/or polymers are of organic nature and/or of polyorganosiloxane nature; the organofunctional groups being epoxide, alkenyl ether and/or acrylic groups.

9. Composition according to either of Claims 7 and 8, **characterized in that** the monomers, oligomers and polymers containing organofunctional groups are of polyorganosiloxane nature, consisting of units of formula (VII) and ending with units of formula (VIII), or of cyclic nature consisting of units of formula (VII), which are represented below: 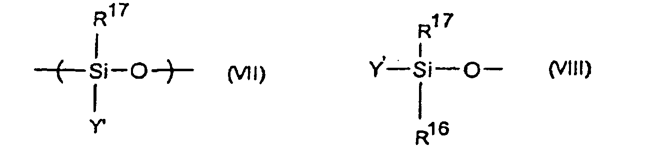 in which:
- R¹⁶ is a linear or branched C₁-C₃₀ alkyl radical;
- the symbols R¹⁷ are identical or different and represent:
• a linear or branched alkyl radical containing 1 to 8 carbon atoms, optionally substituted with at least one halogen, preferably fluorine, the alkyl radicals preferably being methyl, ethyl, propyl, octyl and 3,3,3-trifluoropropyl,
• a cycloalkyl radical containing between 5 and 8 optionally substituted cyclic carbon atoms,
• an aryl radical containing between 6 and 12 carbon atoms which may be substituted, preferably phenyl or dichlorophenyl,
• an aralkyl portion with an alkyl portion containing between 5 and 14 carbon atoms and an aryl portion containing between 6 and 12 carbon atoms, optionally substituted on the aryl portion with halogens, alkyls and/or alkoxys containing 1 to 3 carbon atoms,
- the symbols Y' are identical or different and represent:
• the group R¹⁷,
• a hydrogen radical,
• and/or an organofunctional group which can be crosslinked cationically, preferably an epoxy-functional and/or vinyloxy-functional group, connected to the silicon of the polyorganosiloxane via a divalent radical containing from 2 to 20 carbon atoms and optionally containing at least one hetero atom, preferably oxygen, and
• at least one of the symbols Y' representing a functional organic group which can be crosslinked cationically.

10. Composition according to Claim 9, **characterized in that** at least one of the symbols R¹⁷ of the polyorganosiloxanes used represents a phenyl, tolyl or dichlorophenyl radical.

11. Composition according to either of Claims 7 and 8, **characterized in that** the monomers, oligomers and/or polymers of organic nature containing organofunctional groups belong to at least one of the following species:
- α_{1.1} cycloaliphatic epoxides, taken alone or as a mixture with each other,
- α_{1.2} non-cycloaliphatic epoxides, taken alone or as a mixture with each other,
- α₃ polyols, taken alone or as a mixture with each other,
- α₂ linear or cyclic alkenyl ethers, taken alone or as a mixture with each other.

12. Composition according to Claim 11, **characterized in that** the monomers, oligomers and/or polymers of organic nature are chosen from the group formed by:
- species α_{1.1} consisting of 3,4-epoxycyclohexylmethyl 3',4'-epoxycyclohexanecarboxylate and bis(3,4-epoxycyclohexyl) adipate;
- species α_{1.2} consisting of:
• epoxides of the type resulting from the condensation of optionally alkoxylated Bisphenol A and epichlorohydrin and optionally of 1,6-hexanediol, glycerol, neopentyl glycol or trimethylolpropane,
• Novolac epoxides,
• epoxidized and monohydroxylated, saturated or unsaturated diene polymers;
- species α₂ consisting of vinyl ethers, propenyl ethers and butenyl ethers.

13. Composition according to either of Claims 9 and 10, **characterized in that** the polymerizable and/or crosslinkable composition also comprises monomers, oligomers and/or polymers containing organofunctional groups defined in accordance with Claim 11 or 12.

14. Composition according to any one of Claims 7 to 13, **characterized in that** the crosslinkable composition also comprises monomers, oligomers and/or polymers containing organofunctional groups of acrylate species; and in particular epoxidized acrylates, acrylo-glycero-polyesters, multifunctional acrylates, acrylo-urethanes, acrylo-polyethers, acrylo-polyesters, unsaturated polyesters and acrylo-acrylics.

15. Resin which can be obtained from a composition according to any one of Claims 7 to 14.

16. Coating based on resin according to Claim 15.

17. Coating according to Claim 16, **characterized in that** the coating is an ink.

18. Composite material which can be obtained from a composition according to any one of Claims 7 to 14.

19. Use of a composition according to any one of Claims 7 to 14 for the manufacture of coatings or composite materials.

## Patentansprüche

1. Initiatorsystem für die Polymerisation und/oder Vernetzung, umfassend
(1) mindestens ein Onium-Borat, bei dem
(i) die kationische Einheit ausgewählt wird unter den Oniumsalzen der Formel (I)
[(R¹)ₙ-I-(R²)ₘ]⁺ (I)
in der
- die Reste R¹, gleich oder verschieden, einen carbocyclischen oder heterocyclischen Rest Aryl mit 6 bis 20 Kohlenstoffatomen darstellen, wobei der heterocyclische Rest als Heteroelemente Stickstoff und/oder Schwefel enthalten kann,
- die Reste R², gleich oder verschieden, R¹, einen linearen oder verzweigten Rest Alkyl mit 1 bis 30 Kohlenstoffatomen oder einen linearen oder verzweigten Rest Alkenyl mit maximal 30 Kohlenstoffatomen darstellen,
- wobei die genannten Reste R¹ und R² gegebenenfalls substituiert sind durch:
. eine lineare oder verzweigte Gruppe Alkyl mit 1 bis 25 Kohlenstoffatomen,
. eine Gruppe Alkoxy OR¹³,
. eine ketonische Gruppe -(C=O)-R¹³,
. eine Ester- oder Carboxylgruppe -(C=O)-O-R¹³,
. eine Mercaptogruppe SR¹³,
. eine Mercaptogruppe SOR¹³,
. worin R¹³ ein Rest ist, ausgewählt unter der Gruppe, die gebildet wird von einem Wasserstoffatom, einem linearen oder verzweigten Rest Alkyl mit 1 bis 25 Kohlenstoffatomen, einem Rest Aryl mit 6 bis 30 Kohlenstoffatomen oder einem Rest Alkylaryl, bei dem der Teil Alkyl linear oder verzweigt ist und 1 bis 25 Kohlenstoffatome aufweist und der Teil Aryl 6 bis 30 Kohlenstoffatome besitzt,
. eine Nitrogruppe,
. ein Chloratom,
. ein Bromatom und/oder
. eine Cyanogruppe,
- n eine ganze Zahl von 1 bis v + 1 ist, worin v die Valenz des Iods darstellt,
- m eine ganze Zahl von 0 bis v darstellt, mit n + m = v + 1
(ii) und bei dem die anionische Einheit Borat die Formel
[B Xₐ R³ _{b}]⁻ (II)
besitzt, in der
- a und b ganze Zahlen sind, wie 0 ≤ a < 4, 0 < b ≤ 4, und a + b = 4,
- die Symbole X, gleich oder verschieden, darstellen:
. ein Halogenatom, ausgewählt unter Chlor und/oder Fluor mit 0 ≤ a ≤ 3,
. eine Funktion OH mit 0 ≤ a ≤ 2, und
- die Reste R³, gleich oder verschieden, darstellen:
. einen Rest Phenyl, substituiert durch mindestens eine elektroattraktive Gruppe wie -CF₃, -OCF₃, -NO₂, -CN, -SO₂R¹⁴, -O(C=O)-R¹⁴, -O-CₙF₂ₙ₊₁, -CₙF₂ₙ₊₁, wobei n eine ganze Zahl zwischen 1 und 20 ist oder substituiert ist durch mindestens zwei Halogenatome, insbesondere Fluor,
. einen Rest Aryl, enthaltend mindestens zwei aromatische Kerne wie Biphenyl, Naphthyl, gegebenenfalls substituiert durch mindestens ein Halogenatom, insbesondere Fluor, oder eine elektroattraktive Gruppe wie -CF₃, -OCF₃, -NO₂, -CN, -SO₂R¹⁴, -O(C=O)-R¹⁴, wobei R¹⁴ -O-CₙF₂ₙ₊₁, -CₙF₂ₙ₊₁ ist, und n eine ganze Zahl zwischen 1 und 20 darstellt;
(2) und mindestens ein Benzophenon
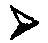 das einer der folgenden Formeln (III) bis (VI) entspricht: 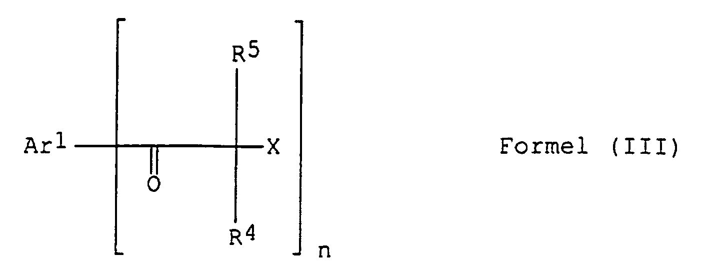 in der
- wenn n = 1 ist, Ar¹ einen Rest Aryl mit 6 bis 18 Kohlenstoffatomen, einen Rest Tetrahydronaphthyl, Thienyl, Pyridyl oder Furyl oder einen Rest Phenyl darstellt, der einen oder mehrere Substituenten trägt, gewählt aus der Gruppe, die gebildet wird durch F, Cl, Br, CN, OH, die linearen oder verzweigten Alkyle mit 1 bis 12 Kohlenstoffatomen, -CF₃, -OR⁶, -OPhenyl, -SR⁶, - SPhenyl, -SO₂Phenyl, -COOR⁶, -O-(CH₂-CH=CH₂), -O(C₂H₄-O)ₘ-H, - O(C₃H₆-O)ₘ-H, worin m zwischen 1 und 100 beträgt,
- wenn n = 2 ist, Ar¹ einen Rest Arylen mit 6 bis 12 Kohlenstoffatomen oder einen Rest Phenylen-T-Phenylen darstellt, worin T -O-, -S-, -SO₂- oder -CH₂- bedeutet,
- X eine Gruppe -OR⁷ oder -OSiR⁸(R⁹)₂ darstellt oder zusammen mit R⁴ eine Gruppe -O-CH(R¹⁰)- bildet,
- R⁴ einen linearen oder verzweigten Rest Alkyl mit 1 bis 8 Kohlenstoffatomen, nicht substituiert oder Träger einer Gruppe -OH, -OR⁶, Acyloxy mit 2 bis 8 Kohlenstoffatomen, -COOR⁶, -CF₃ oder -CN, einen Rest Alkenyl mit 3 oder 4 Kohlenstoffatomen, einen Rest Aryl mit 6 bis 18 Kohlenstoffatomen, einen Rest Phenylalkyl mit 7 bis 9 Kohlenstoffatomen darstellt,
- R⁵ eine der oben bei R⁴ angegebenen Bedeutungen besitzt oder einen Rest -CH₂CH₂R¹¹ darstellt, oder auch zusammen mit R⁴ einen Rest Alkylen mit 2 bis 8 Kohlenstoffatomen oder einen Rest Oxa-Alkylen oder Aza-Alkylen mit 3 bis 9 Kohlenstoffatomen bildet,
- R⁶ einen niederen Rest Alkyl mit 1 bis 12 Kohlenstoffatomen darstellt,
- R⁷ ein Wasserstoffatom, einen Rest Alkyl mit 1 bis 12 Kohlenstoffatomen, einen Rest Alkyl mit 2 bis 6 Kohlenstoffatomen, der eine Gruppe -OH, -OR⁶ oder -CN trägt, einen Rest Alkenyl mit 3 bis 6 Kohlenstoffatomen, einen Rest Cyclohexyl oder Benzyl, einen Rest Phenyl, gegebenenfalls substituiert durch ein Chloratom oder einen linearen oder verzweigten Rest Alkyl mit 1 bis 12 Kohlenstoffatomen, oder einen Rest 2-Tetrahydropyranyl darstellt,
- R⁸ und R⁹ gleich oder verschieden sind und jeweils einen Rest Alkyl mit 1 bis 4 Kohlenstoffatomen oder einen Rest Phenyl darstellen,
- R¹⁰ ein Wasserstoffatom, einen Rest Alkyl mit 1 bis 8 Kohlenstoffatomen oder einen Rest Phenyl darstellt,
- R¹¹ einen Rest -CONH₂, -CONHR⁶, -CON(R⁶)₂, -P(O) (OR⁶)₂ oder 2- Pyridyl darstellt; 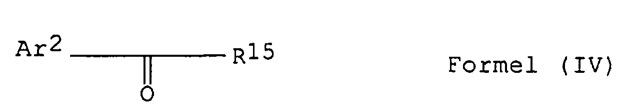 in der
- Ar² die gleiche Bedeutung wie Ar¹ in der Formel (III) in dem Fall besitzt, wo n = 1 ist,
- R¹⁵ einen Rest darstellt, gewählt aus der Gruppe, die gebildet wird durch einen Rest Ar², einen Rest -(C=O)-Ar², einen linearen oder verzweigten Rest Alkyl mit 1 bis 12 Kohlenstoffatomen, einen Rest Cycloalkyl mit 6 bis 12 Kohlenstoffatomen und einen Rest Cycloalkyl, der mit dem Kohlenstoff des Ketons oder einem Kohlenstoff des Restes Ar² einen Ring mit 6 bis 12 Kohlenstoffatomen bildet, wobei diese Reste substituiert sein können durch einen oder mehrere Substituenten, gewählt aus der Gruppe, die gebildet wird durch -F, -Cl, -Br, -CN, -OH, -CF₃, -OR⁶, -SR⁶, -COOR⁶, die linearen oder verzweigten Reste Alkyl mit 1 bis 12 Kohlenstoffatomen, die gegebenenfalls eine Gruppe -OH, -OR⁶ und/oder -CN tragen, und die linearen oder verzweigten Reste Alkenyl mit maximal 8 Kohlenstoffatomen; 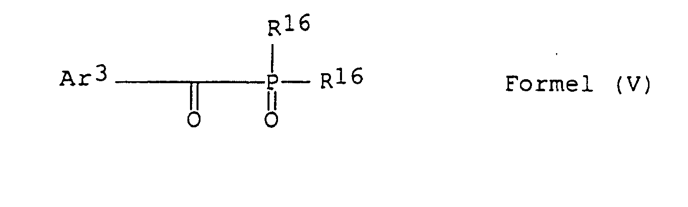
in der
- Ar³ die gleiche Bedeutung wie Ar¹ in der Formel (III) in dem Fall besitzt, wo n = 1 ist,
- R¹⁶, gleich oder verschieden, einen Rest darstellen, gewählt aus der Gruppe, die gebildet wird durch einen Rest Ar³, einen Rest -(C=O)-Ar³, einen linearen oder verzweigten Rest Alkyl mit 1 bis 12 Kohlenstoffatomen, einen Rest Cycloalkyl mit 6 bis 12 Kohlenstoffatomen, wobei diese Reste substituiert sein können durch einen oder mehrere Substituenten, gewählt aus der Gruppe, die gebildet wird durch -F, -Cl, -Br, -CN, -OH, -CF₃, -OR⁶, -SR⁶, -COOR⁶, die linearen oder verzweigten Reste Alkyl mit 1 bis 12 Kohlenstoffatomen, die gegebenenfalls eine Gruppe -OH, - OR⁶ und/oder -CN tragen, und die linearen oder verzweigten Reste Alkenyl mit maximal 8 Kohlenstoffatomen; 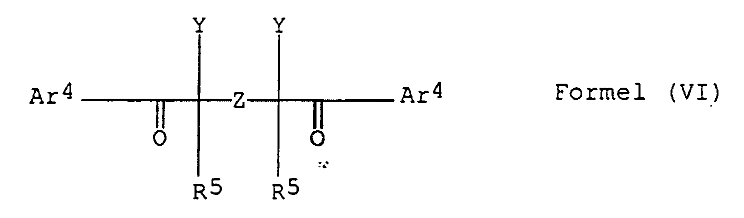 in der
- R⁵, gleich oder verschieden, die gleichen Bedeutungen besitzt wie in der Formel (III),
- Y, gleich oder verschieden, X und/oder R⁴ darstellt,
- Z darstellt:
. eine direkte Bindung,
. einen divalenten Rest Alkylen mit 1 bis 6 Kohlenstoffatomen oder einen Rest Phenylen, Diphenylen oder Phenylen-T-Phenylen, oder auch zusammen mit den zwei Substituenten R⁵ und den zwei Kohlenstoffatomen, die diese Substituenten tragen, einen Kern von Cyclopentan oder Cyclohexan bildet,
. eine divalente Gruppe -O-R¹²-O-, -O-SiR⁸R⁹-O-SiR⁸R⁹-O- oder - O-SiR⁸R⁹-O-,
- R¹² einen Rest Alkylen mit 2 bis 8 Kohlenstoffatomen, Alkenylen mit 4 bis 6 Kohlenstoffatomen oder Xylylen darstellt, und
- Ar⁴ die gleiche Bedeutung wie Ar¹ in der Formel (III) in dem Fall besitzt, wo n = 1 ist;
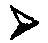 oder das dem Dibenzoylperoxid entspricht.

2. Initiatorsystem nach Anspruch 1, **dadurch gekennzeichnet, daß** das Gewichtsverhältnis Onium-Borat/Benzophenon zwischen 0,1 und 10 beträgt.

3. Initiatorsystem nach Anspruch 1, **dadurch gekennzeichnet, daß** die anionische Einheit des Onium-Borates aus der Gruppe gewählt wird, die gebildet wird durch [B(C₆F₅)₄]⁻, [B(C₆H₃(CF₃)₂)₄]⁻, [B(C₆H₄OCF₃)₄]⁻, [B(C₆H₄CF₃)₄]⁻, [(C₆F₅)₂ B F₂]⁻, [C₆F₅ B F₃]⁻, [B(C₆H₃F₂)₄]⁻ und ihre Mischung.

4. Initiatorsystem nach einem der vorstehenden Ansprüche, **dadurch gekennzeichnet, daß** die anionische Einheit des Oniumsalzes ausgewählt wird unter [B(C₆F₅)₄]⁻, [B(C₆H₃(CF₃)₂)₄]⁻, [B(C₆H₄OCF₃)₄]⁻ und ihrer Mischung.

5. Initiatorsystem nach irgendeinem der vorstehenden Ansprüche, **dadurch gekennzeichnet, daß** die kationische Einheit des Onium-Borates aus der Gruppe gewählt wird, die gebildet wird durch:
[ (C₆H₅)₂I]⁺, [C₈H₁₇-O-C₆H₅-I-C₆H₅]⁺,
[C₁₂H₂₅-C₆H₅-I-C₆H₅]⁺, [(C₈H₁₇O-C₆H₅)₂I]⁺,
[ (C₈H₁₇)-O-C₆H₅-I-C₆H₅]⁺, [(C₁₂H₂₅-C₆H₅)₂I]⁺,
[(CH (CH₃)₂-C₆H₅)-I-C₆H₅-CH₃]⁺, [C₆H₄-O-C₆H₄-I-C₆H₄]⁺,
[C₆H₄-(C=O)-C₆H₄-I-C₆H₄]⁺, [C₆H₄-O-C₆H₄-I-C₆H₄-O-C₆H₄]⁺,
[C₆H₄-(C=O)-C₆H₄-I-C₆H₄-(C=O)-C₆H₄]⁺
und ihre Mischung.

6. Initiatorsystem nach irgendeinem der vorstehenden Ansprüche, **dadurch gekennzeichnet, daß** das Benzophenon aus der Gruppe gewählt wird, die gebildet wird durch: 4,4'-Dimethoxybenzoin; Phenanthrenchinon; 2-Ethylanthrachinon; 2-Methylanthrachinon; 1,8-Dihydroxyanthrachinon; 2,2-Dimethoxy-2-phenylacetophenon; Benzoin; 2-Hydroxy-2-methylpropiophenon; Benzaldehyd; 4-(2-Hydroxyethoxy)-phenyl-(2-hydroxy-2-methylpropyl)-keton; Benzoylaceton; 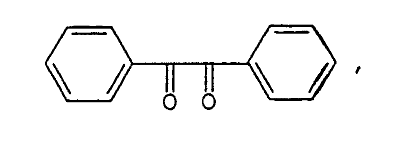 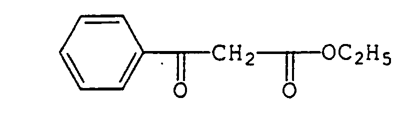 und ihre Mischung.

7. Zusammensetzung, auf kationischem Wege unter thermischer, photochemischer oder Elektronenstrahl-Aktivierung polymerisierbar und/oder vernetzbar, umfassend mindestens eine Matrix auf der Basis von auf kationischem Wege polymerisierbaren und/oder vernetzbaren Monomeren, Oligomeren und/oder Polymeren und eine katalytisch wirksame Menge von mindestens einem Initiatorsystem nach irgendeinem der Ansprüche 1 bis 6.

8. Zusammensetzung nach Anspruch 7, **dadurch gekennzeichnet, daß** die Monomeren, Oligomeren und/oder Polymeren von organischer und/oder polyorganosiloxanischer Beschaffenheit sind, wobei die organofunktionellen Gruppen Epoxid-, Alkenylether- und/oder acrylische Gruppen sind.

9. Zusammensetzung nach irgendeinem der Ansprüche 7 und 8, **dadurch gekennzeichnet, daß** die Monomeren, Oligomeren und Polymeren mit organofunktionellen Gruppen von polyorganosiloxanischer Beschaffenheit sind und gebildet werden von Struktureinheiten der Formel (VII) mit Endgruppen von Struktureinheiten der Formel (VIII), oder cyclisch sind, gebildet durch die unten dargestellten Struktureinheiten der Formel (VII): 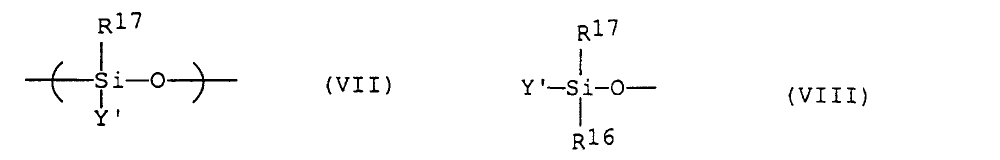 in denen 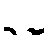
- R¹⁶ ein linearer oder verzweigter Rest Alkyl mit 1 bis 30 Kohlenstoffatomen ist;
die Symbole R¹⁷ gleich oder verschieden sind und darstellen:
. einen linearen oder verzweigten Rest Alkyl mit 1 bis 8 Kohlenstoffatomen, gegebenenfalls substituiert durch mindestens ein Halogen, vorzugsweise Fluor, wobei die bevorzugten Reste Alkyl Methyl, Ethyl, Propyl, Octyl und 3,3,3-Trifluorpropyl sind;
. einen Rest Cycloalkyl, enthaltend zwischen 5 und 8 cyclische Kohlenstoffatome, gegebenenfalls substituiert;
. einen Rest Aryl, enthaltend zwischen 6 und 12 Kohlenstoffatome, die substituiert sein können, vorzugsweise Phenyl oder Dichlorphenyl;
. einen Teil Aralkyl mit einem Teil Alkyl, enthaltend zwischen 5 und 14 Kohlenstoffatome und einen Teil Aryl, enthaltend zwischen 6 und 12 Kohlenstoffatome, gegebenenfalls substituiert an dem Teil Aryl durch Halogene, Alkyle und/oder Alkoxyle mit 1 bis 3 Kohlenstoffatomen;
- die Symbole Y' gleich oder verschieden sind und darstellen:
. die Gruppe R¹⁷,
. einen Wasserstoffrest und/oder
. eine auf kationischem Wege vernetzbare organofunktionelle Gruppe, vorzugsweise eine epoxyfunktionelle und/oder vinyloxyfunktionelle Gruppe, verbunden mit dem Silicium des Polyorganosiloxans durch das Zwischenteil eines divalenten Restes mit 2 bis 20 Kohlenstoffatomen, das mindestens ein Heteroatom enthalten kann, vorzugsweise Sauerstoff,
. und wobei mindestens eines der Symbole Y' eine auf kationischem Wege vernetzbare funktionelle organische Gruppe darstellt.

10. Zusammensetzung nach Anspruch 9, **dadurch gekennzeichnet, daß** mindestens eines der Symbole R¹⁷ der verwendeten Polyorganosiloxane einen Rest Phenyl, Tolyl oder Dichlorphenyl darstellt.

11. Zusammensetzung nach irgendeinem der Ansprüche 7 und 8, **dadurch gekennzeichnet, daß** die Monomeren, Oligomeren und/oder Polymeren von organischer Beschaffenheit mit organofunktionellen Gruppen von mindestens einer der folgenden Arten abstammen:
- α 1.1 den cycloaliphatischen Epoxiden, allein genommen oder in Mischung untereinander,
- α 1.2 den nicht cycloaliphatischen Epoxiden, allein genommen oder in Mischung untereinander,
- α 3 den Polyolen, allein genommen oder in Mischung untereinander,
- α 2 den linearen oder cyclischen Alkenyl-ethern, allein genommen oder in Mischung untereinander.

12. Zusammensetzung nach Anspruch 11, **dadurch gekennzeichnet, daß** die Monomeren, Oligomeren und/oder Polymeren von organischer Beschaffenheit aus der Gruppe gewählt werden, die gebildet wird durch:
- die Arten α 1.1, bestehend aus 3,4-Epoxycyclohexylmethyl-3',4'epoxycyclohexan-carboxylat oder Bis-(3,4-Epoxycyclohexyl)-adipat;
- die Arten α 1.2, bestehend aus:
. den Epoxiden von dem Typ, der aus der Kondensation von Bisphenol A, gegebenenfalls alkoxyliert, und Epichlorhydrin und gegebenenfalls 1,6-Hexandiol, Glycerin, Neopentylglycol und Trimethylolpropan resultiert,
. den NOVOLAC-Epoxiden,
. den dienischen und monohydroxylierten Epoxid-Polymeren, gesättigt oder ungesättigt,
- die Arten a 2, bestehend aus den Vinyl-Ethern, den Propenyl-Ethern und den Butenyl-Ethern.

13. Zusammensetzung nach irgendeinem der Ansprüche 9 und 10, **dadurch gekennzeichnet, daß** die polymerisierbare und/oder vernetzbare Zusammensetzung außerdem Monomere, Oligomere und/oder Polymere mit organofunktionellen Gruppen umfaßt, wie sie in Übereinstimmung mit dem Anspruch 11 oder 12 definiert sind.

14. Zusammensetzung nach irgendeinem der Ansprüche 7 bis 13, **dadurch gekennzeichnet, daß** die vernetzbare Zusammensetzung außerdem Monomere, Oligomere und/oder Polymere mit organofunktionellen Gruppen der Art Acrylat umfaßt, und insbesondere Epoxid-acrylate, Acrylo-glycero-polyester, multifunktionelle Acrylate, Acrylourethane, Acrylo-polyether, Acrylo-polyester, ungesättigte Polyester, acrylo-acrylische Polyester.

15. Harz, das geeignet ist, ausgehend von einer Zusammensetzung nach irgendeinem der Ansprüche 7 bis 14 erhalten zu werden.

16. Überzug auf der Basis des Harzes nach Anspruch 15.

17. Überzug nach Anspruch 16, **dadurch gekennzeichnet, daß** der Überzug eine Tinte ist.

18. Kompositmaterial, das geeignet ist, ausgehend von einer Zusammensetzung nach irgendeinem der Ansprüche 7 bis 14 erhalten zu werden.

19. Verwendung einer Zusammensetzung nach irgendeinem der Ansprüche 7 bis 14 zur Herstellung von Überzügen oder Kompositmaterialien.
